# FASCICULE DE BREVET EUROPEEN

(11) **EP 3 379 770 B1**
(45) Date de publication et mention de la délivrance du brevet: **22.05.2019**
(21) Numéro de dépôt: 17186783.1
(22) Date de dépôt: 18.08.2017
(51) Int. Cl.: H04L 9/32, H04L 9/00

(54) **DISPOSITIF INTÉGRÉ DE FONCTION PHYSIQUEMENT NON CLONABLE, ET PROCÉDÉ DE RÉALISATION**
INTEGRIERTES GERÄT MIT PHYSISCH UNKLONBARER FUNKTION, UND HERSTELLUNGSVERFAHREN
INTEGRATED DEVICE WITH PHYSICAL UNCLONABLE FUNCTION, AND MANUFACTURING METHOD

(30) Priorité: 22.03.2017 FR 1752336
(43) Date de publication de la demande: 26.09.2018
(73) Titulaire: STMicroelectronics (Crolles 2) SAS, 38920 Crolles (FR); STMicroelectronics (Rousset) SAS, 13790 Rousset (FR)
(72) Inventeur: LISART, Mathieu, 13100 Aix en Provence (FR); BIANCHI, Raul Andres, 73800 Myans (FR); FROMENT, Benoït, 38000 Grenoble (FR)
(74) Mandataire: Casalonga

(56) Documents cités:
- US-A1- 2011 317 829
- US-A1- 2013 322 617
- WENJIE CHE ET AL: "A non-volatile memory based physically unclonable function without helper data", COMPUTER-AIDED DESIGN, IEEE PRESS, 445 HOES LANE, PO BOX 1331, PISCATAWAY, NJ 08855-1331 USA, 3 novembre 2014 (2014-11-03), pages 148-153, XP058062251, DOI: 10.1109/ICCAD.2014.7001345 ISBN: 978-1-4799-6277-8

## Description

Des modes de mise en oeuvre et de réalisation de l'invention concernent les fonctions physiquement non clonables (PUF : Physical Unclonable Function), et tout particulièrement celles réalisées au sein d'un circuit intégré.

Une fonction physiquement non clonable permet de générer automatiquement un code unique non prédictible qui dépend de caractéristiques physiques aléatoires ou partiellement aléatoires de la fonction physiquement non clonable. Ces caractéristiques physiques peuvent être provoquées par des variations durant la fabrication de la fonction physiquement clonable.

Ainsi, le clonage d'une telle fonction est très difficile voire impossible.

Par ailleurs, le contenu du code généré, qui est unique, car différent d'une fonction physiquement non clonable à une autre fonction physiquement non clonable, ne peut pas être prévu et peut dépendre par exemple d'une configuration particulière de composants lors de la mise sous tension de la fonction. Ainsi, par exemple, une fonction physiquement non clonable peut être réalisée par une mémoire non volatile qui présente un contenu lors de la mise sous tension qui dépend des caractéristiques physiques partiellement aléatoires de la mémoire, ces variations de fabrication conduisant à des caractéristiques physiques différentes pour différentes mémoires.

Actuellement, on peut réaliser des fonctions physiquement non clonables à l'aide par exemple de mémoires vives ou non volatiles, ou encore d'oscillateurs en anneaux ou encore de circuits logiques spécifiques.

Les documents de publication de demande de brevet US 2013/0322617 A1 par Orshansky et US 2011/0317829 A1 par Ficke et al, ainsi que l'article "A Non-Volatile Memory Based Physically Unclonable Function without Helper Data" par W. Che et al, exposent des fonctions physiquement non clonables.

Cependant, ces dispositifs de l'art antérieur peuvent dans certains cas être plus ou moins facilement détectables au sein du circuit intégré ou alors être peu robustes vis-à-vis de modifications de température ou de vieillissement ou encore être sensibles à des attaques par injection de faute.

Il existe donc un besoin de proposer une structure de fonction physiquement non clonable qui soit difficilement détectable tout en étant suffisamment robuste vis-à-vis de variations de température ou de vieillissement et simple à réaliser dans les technologies CMOS existantes.

Selon un mode de mise en oeuvre et de réalisation, il est proposé un dispositif intégré de fonctions physiquement non clonables basé sur un ensemble de transistors MOS présentant une distribution aléatoire de tensions de seuil obtenues par des implantations latérales de dopants présentant des caractéristiques non prédictibles, résultant par exemple d'implantations à travers une couche de polysilicium. On utilise alors un certain nombre de ces transistors comme groupe de transistors « témoins » qui vont permettre de définir une tension grille-source moyenne permettant de polariser les grilles de certains autres de ces transistors (qui vont être utilisés pour définir les différents bits du code unique généré par la fonction). Tous ces transistors présentent par conséquent une distribution aléatoire de courants drain-source et la comparaison de chaque courant drain-source d'un transistor associé à un bit du code numérique avec un courant de référence correspondant à la moyenne de cette distribution, va permettre de définir la valeur logique 0 ou 1 de ce bit.

Ainsi, selon un aspect, il est proposé un circuit intégré comprenant au moins un domaine comportant un dispositif de fonction physiquement non clonable.

Ce dispositif de fonction physiquement non clonable comprend
- un ensemble de transistors MOS présentant une distribution aléatoire de tensions de seuil respectives,
- des premiers moyens de couplage couplant un groupe de N premiers transistors dudit ensemble et au moins un deuxième transistor dudit ensemble via au moins un noeud commun, et
- des deuxièmes moyens de couplage entre chaque noeud commun et un noeud de sortie correspondant de ladite fonction.

Le groupe de N premiers transistors forme un groupe de transistors « témoins » qui va permettre de définir une tension grille-source moyenne permettant de polariser chaque deuxième transistor dudit ensemble.

Chaque deuxième transistor va être associé à un signal de sortie dont la valeur va permettre de définir une valeur logique d'un bit d'un code numérique unique délivré par la fonction physiquement non clonable, par exemple lors de la mise sous tension dudit domaine du circuit intégré.

Alors que l'invention peut parfaitement s'appliquer avec un seul deuxième transistor, généralement, le nombre de deuxièmes transistors est plus élevé puisqu'il définit le nombre de bits du code délivré par la fonction. Et lorsque ce code est avantageusement utilisé en tant que clé, il est préférable que ce nombre de bits soit important, au moins supérieur à 10, par exemple 32 ou 64.

De même, de façon à obtenir une bonne définition de la tension grille-source moyenne qui va polariser les grilles des deuxièmes transistors, il est préférable que le nombre N soit suffisamment grand.

A titre indicatif, on pourra choisir un nombre N de préférence supérieur ou égal à 10, ce nombre N pouvant être toutefois bien supérieur, par exemple de l'ordre de 100, sans que cette valeur ne soit limitative.

De même, il est possible mais non nécessaire, que le nombre N de premiers transistors soit égal au nombre de deuxièmes transistors.

Les premiers moyens de couplage sont configurés pour prendre au moins un premier état dans lequel ils sont aptes, lorsque le domaine est alimenté,
- à générer un courant principal et à répartir le courant principal dans les N premiers transistors de façon à générer pour chaque premier transistor une première tension de grille-source moyenne,
- à polariser la grille de chaque deuxième transistor par ladite première tension de grille-source moyenne, et
- à délivrer à chaque noeud commun un courant de référence égal à un courant de base correspondant à 1/Nème du courant principal.

Par ailleurs, les deuxièmes moyens de couplage sont configurés pour délivrer à chaque noeud de sortie un signal de sortie dont le niveau dépend d'une comparaison entre le niveau du courant de référence et le niveau du courant traversant le deuxième transistor correspondant.

Et, à chaque mise sous tension, le niveau du courant traversant chaque deuxième transistor sera identique.

Bien qu'il soit possible de placer les premiers moyens de couplage dans leur premier état dès la première mise sous tension, il est toutefois préférable et particulièrement avantageux de ne pas placer les premiers moyens de couplage dans leur premier état immédiatement lors de la première mise sous tension.

En effet, il est tout à fait possible dans certains cas, que le courant traversant un deuxième transistor soit très proche du courant de référence pouvant conduire alors à une instabilité dans la comparaison.

Aussi, est-il préférable lors de la première mise sous tension de la fonction physiquement non clonable de détecter ces bits instables pour pouvoir prendre une décision quant à leur valeur logique.

C'est la raison pour laquelle il est préférable, lors de la première mise sous tension, de placer tout d'abord les premiers moyens de couplage dans un état dans lequel on va soit décaler le courant principal (deuxième état) soit décaler le courant de référence (troisième état), dans un sens ou dans l'autre.

D'un point de vue réalisation matérielle, il est préférable que ce soit le courant principal qui soit décalé.

Ainsi, selon un mode de réalisation, les premiers moyens de couplage sont configurables et capables de prendre en outre sur commande un deuxième état dans lequel ils sont aptes, lorsque le domaine est alimenté,
- à générer successivement un premier courant superposé résultant d'une superposition du courant principal et d'un courant auxiliaire puis un deuxième courant superposé résultant d'une superposition du courant principal et du courant auxiliaire opposé, ou le deuxième courant puis le premier courant,
- à répartir successivement chacun des courants superposés dans les N premiers transistors de façon à générer pour chaque premier transistor une deuxième tension grille source moyenne correspondante,
- à polariser la grille de chaque deuxième transistor par ladite deuxième tension grille source moyenne correspondante, et
- à délivrer à chaque noeud commun ledit courant de référence égal audit courant de base.

Cela étant, il serait également possible de décaler le courant de référence.

Ainsi, selon un autre mode de réalisation possible, les premiers moyens de couplage sont configurables et capables de prendre en outre sur commande un troisième état dans lequel ils sont aptes, lorsque ledit domaine est alimenté,
- à générer ledit courant principal,
- à répartir le courant principal dans les N premiers transistors de façon à générer pour chaque premier transistor ladite première tension de grille source moyenne,
- à polariser la grille de chaque deuxième transistor par ladite première tension de grille source moyenne, et
- à délivrer successivement à chaque noeud commun en tant que courant de référence un premier courant résultant d'une superposition du courant de base et du courant auxiliaire puis un deuxième courant résultant d'une superposition dudit courant de base et du courant auxiliaire opposé, ou le deuxième courant puis le premier courant.

Quel que soit le mode de réalisation choisi, le dispositif comprend avantageusement des moyens de commande configurés pour placer les premiers moyens de couplage dans leur deuxième ou dans leur troisième état et des moyens de traitement configurés pour analyser au niveau de chaque noeud de sortie la valeur du signal de sortie associée audit courant auxiliaire et la valeur du signal de sortie associée au courant auxiliaire opposé, et
- en cas de discordance entre les deux valeurs logiques du bit correspondant du code numérique respectivement associées à ces deux valeurs de signal de sortie, prendre une décision quant à la gestion du bit correspondant du code numérique.

Les moyens de commande sont avantageusement configurés pour placer les premiers moyens de couplage dans leur deuxième ou leur troisième état lors de la première mise sous tension dudit domaine et pour placer les premiers moyens de couplage dans leur premier état postérieurement à leur placement dans leur deuxième ou leur troisième état et lors de toute mise sous tension ultérieure.

Ladite décision prise lors de la première mise sous tension est alors valable pour toute la suite de la première mise sous tension et pour toute mise sous tension ultérieure.

Et, cette décision peut être prise par les moyens de traitement parmi les décisions suivantes ou une combinaison des décisions suivantes :
une non prise en compte du bit correspondant dans le code numérique ou une fixation d'une valeur logique arbitraire pour ce bit.

En pratique, les premiers moyens de couplage peuvent comprendre une source de courant auxiliaire commandable configurée pour générer le courant auxiliaire ou le courant auxiliaire opposé.

Par ailleurs, les premiers moyens de couplage sont configurés pour
agencer chaque premier transistor selon un montage en diode,
connecter tous les premiers transistors en parallèle et
connecter les grilles des premiers transistors à la grille de chaque deuxième transistor.

Par ailleurs, les premiers moyens de couplage comportent dans leur premier état un bloc diviseur de courant connecté entre les grilles des premiers transistors et chaque noeud commun.

Le bloc diviseur de courant peut comprendre un miroir de courant connecté entre les N premiers transistors et chaque noeud commun.

Cela étant, en variante, il est avantageux, notamment pour réduire la consommation de courant, que le bloc diviseur de courant comprenne un transistor principal connecté aux grilles des premiers transistors et destiné à imposer ledit courant principal et à être polarisé sur sa grille par une tension de polarisation, ainsi qu'un transistor secondaire connecté à chaque noeud commun, dont la grille est connectée à la grille du transistor principal et configurée pour fournir au noeud commun correspondant ledit courant de base, égal à un 1/N^{ème} du courant principal.

La source de courant auxiliaire commandable peut être alors de préférence couplée aux grilles des premiers transistors et donc au drain du transistor principal.

Selon un mode de réalisation, qui est une conséquence d'un exemple de procédé de réalisation du dispositif de fonction physiquement non clonable, ledit domaine comprend au moins un transistor supplémentaire à côté de chaque transistor MOS dudit ensemble dont la région de canal comprend des dopants de même type de conductivité que les dopants des régions de source et de drain dudit au moins un transistor supplémentaire.

En fait, ce transistor supplémentaire a une grille qui résulte de la gravure d'une couche de polysilicium pleine plaque à travers laquelle on a réalisé une implantation de dopant et qui a permis d'obtenir une variabilité de la tension de seuil des transistors MOS dudit ensemble.

Et, de ce fait, ce transistor supplémentaire est généralement tout le temps passant.

Par ailleurs, il contribue avantageusement à une non détectabilité de la fonction physiquement non clonable puisque vu du dessus, on ne peut pas savoir si ce transistor est un transistor normal ou un transistor toujours passant par exemple.

De façon à élargir la distribution aléatoire des tensions de seuil, il est préférable que chaque transistor MOS dudit ensemble soit encadré par deux transistors supplémentaires.

Selon un autre aspect, il est proposé un procédé de réalisation d'un dispositif de fonction physiquement non clonable au sein d'un domaine d'un circuit intégré, comprenant
une réalisation au sein dudit domaine d'un ensemble de transistors MOS présentant une distribution aléatoire de tensions de seuil respectives,
un premier couplage d'un groupe de N premiers transistors dudit ensemble et d'au moins un deuxième transistor dudit ensemble via au moins un noeud commun,
un deuxième couplage entre chaque noeud commun et un noeud de sortie correspondant dudit dispositif,
le premier couplage étant configuré pour, lorsque ledit domaine est alimenté, générer un courant principal et éventuellement un courant auxiliaire ou le courant auxiliaire opposé, répartir le courant principal ou le courant principal superposé au courant auxiliaire ou au courant auxiliaire opposé dans les N premiers transistors de façon à générer pour chaque premier transistor une tension grille source moyenne correspondante, à polariser la grille de chaque deuxième transistor par ladite tension grille source moyenne correspondante, et délivrer à chaque noeud commun un courant de référence égal à un courant de base correspondant à 1/N^{ème} du courant principal ou au courant de base superposé au courant auxiliaire ou au courant auxiliaire opposé,
le deuxième couplage étant configuré pour délivrer à chaque noeud de sortie un signal de sortie dont le niveau dépend d'une comparaison entre le niveau du courant de référence et le niveau du courant traversant le deuxième transistor principal correspondant.

Selon un mode de mise en oeuvre, le premier couplage comprend un montage de chaque premier transistor en diode, un montage de tous les premiers transistors en parallèle, une connexion des grilles des premiers transistors à la grille de chaque deuxième transistor et une réalisation d'un bloc diviseur de courant connecté entre les grilles des premiers transistors et chaque noeud commun.

Selon une variante, la réalisation du bloc diviseur de courant comprend une réalisation d'un miroir de courant connecté entre les N premiers transistors et chaque noeud commun.

Selon une autre variante, avantageuse en termes de consommation, la réalisation du bloc diviseur de courant comprend une réalisation d'un transistor principal connecté aux grilles des premiers transistors et destiné à imposer ledit courant principal et à être polarisé sur sa grille par une tension de polarisation, et un transistor secondaire connecté à chaque noeud commun, dont la grille est connectée à la grille du transistor principal et configuré pour fournir au noeud commun correspondant ledit courant de base, égal à 1/N^{ème} du courant principal.

Selon un mode de mise en oeuvre, permettant avantageusement l'obtention de la distribution aléatoire de tensions de seuil, la réalisation dudit ensemble de transistors MOS comprend
une formation au-dessus d'un substrat du circuit intégré d'une couche de polysilicium,
une formation sur ladite couche de polysilicium d'un masque comportant des ouvertures,
une implantation initiale dans le substrat à travers lesdites ouvertures et les parties découvertes de la couche de polysilicium, de dopants ayant le même type de conductivité que les régions de source et de drain de l'ensemble desdits transistors MOS de façon à réaliser des régions implantées initiales débordant de chaque côté desdites parties découvertes de polysilicium,
un retrait du masque et une formation desdits transistors MOS à côté desdites parties découvertes de polysilicium de sorte que chaque premier ou deuxième transistor MOS ait dans le substrat une zone active incorporant au moins une partie d'une région implantée initiale.

Selon un mode de mise en oeuvre préférentiel, chaque premier ou deuxième transistor MOS est encadré par deux parties découvertes de polysilicium de sorte que chaque premier ou deuxième transistor MOS ait dans le substrat une zone active incorporant de chaque côté au moins une partie d'une région implantée initiale.

Selon un mode de mise en oeuvre, le circuit intégré incorporant ledit dispositif de fonction physiquement non clonable est réalisé au sein d'une plaque semiconductrice simultanément à d'autres circuits intégrés, ladite couche de polysilicium ainsi que ledit masque sont formés au-dessus du substrat de toute la plaque et ladite implantation initiale de dopants est effectuée pleine plaque.

Cette implantation pleine plaque permet donc d'obtenir une variabilité d'implantation au niveau de tous les transistors destinés à être réalisés à côté des ouvertures du masque, ce qui permet, après découpage de la plaque pour individualiser les circuits intégrés, d'obtenir des circuits intégrés présentant des fonctions physiquement non clonables délivrant un code numérique unique et différent pour chaque circuit intégré.

Selon un autre aspect, il est proposé un procédé de génération automatique d'un code unique non prédictible à chaque noeud de sortie d'un dispositif de fonction physiquement non clonable appartenant à un circuit intégré tel que défini ci-avant ou réalisé conformément au procédé défini ci-avant, ce procédé de génération automatique comprenant au moins une mise sous tension du domaine du circuit intégré incorporant ledit dispositif de fonction physiquement non clonable.

Selon un mode de mise en oeuvre, on peut appliquer une tension de polarisation sur la grille du transistor principal du bloc diviseur de courant et sur la grille de chaque transistor secondaire, ce qui permet notamment de limiter la consommation de courant.

Ceci permet également notamment de produire une tension grille-source moyenne proche de la tension de seuil des premiers et deuxièmes transistors MOS, ce qui permet d'amplifier l'impact sur la dispersion en courant résultant de la dispersion en tension de seuil.

Selon un mode de mise en oeuvre, le procédé de génération automatique comprend en outre, lors de la première mise sous tension du domaine du circuit intégré incorporant le dispositif de fonction physiquement non clonable, une première superposition audit courant principal d'un courant auxiliaire et une deuxième superposition audit courant principal du courant auxiliaire opposé, une analyse de la valeur du signal de sortie délivré par chaque noeud de sortie lors de la première superposition et une analyse de la valeur du signal de sortie délivré par chaque noeud de sortie lors de la deuxième superposition, et en cas de discordance entre les deux valeurs logiques du bit correspondant du code numérique respectivement associées à ces deux valeurs de signal de sortie, une prise de décision quant à la gestion dudit bit, décision valable pour la suite de la première mise sous tension et pour toute mise sous tension ultérieure.

Cette prise de décision peut comprendre une non prise en compte du bit correspondant dans le code numérique ou une fixation d'une valeur logique arbitraire pour ce bit ou une combinaison de ces deux décisions.

D'autres avantages et caractéristiques de l'invention apparaîtront à l'examen de la description détaillée de modes de mise en oeuvre et de réalisation, nullement limitatifs, et des dessins annexés sur lesquels :

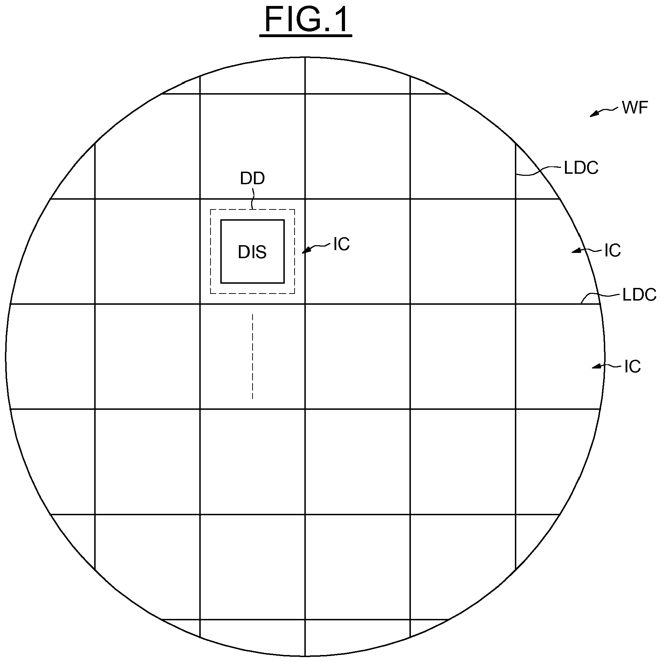

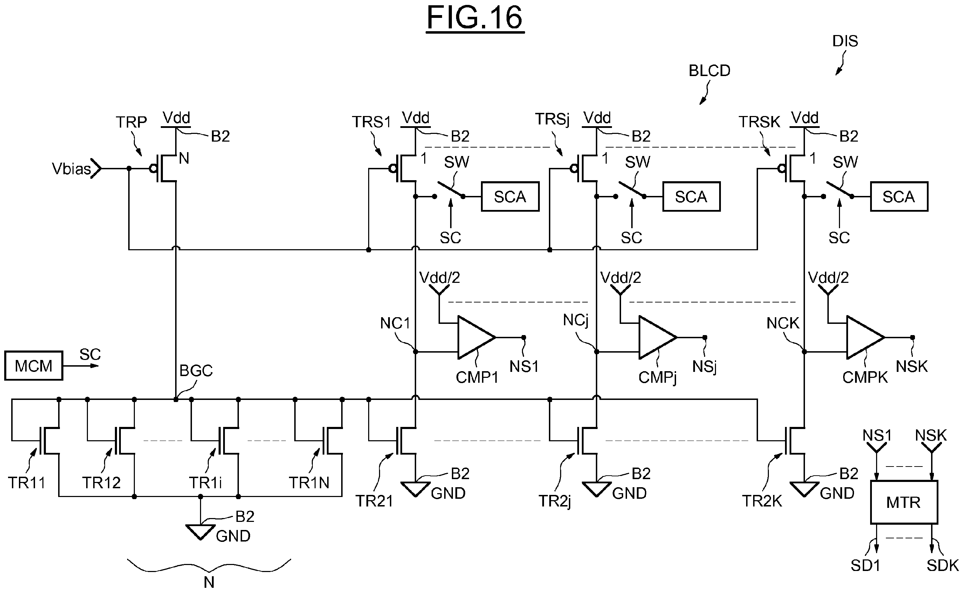

- les figures 1 à 19 illustrent schématiquement différents aspects, modes de mise en oeuvre et modes de réalisation de l'invention.

Sur la figure 1, la référence WF désigne une plaque semiconductrice (ou « wafer » en langue anglaise) présentant de façon classique et connue des lignes de découpe LDC des zones de la plaque contenant chacune un circuit intégré IC.

Ce circuit intégré IC contient ici un domaine DD incorporant un dispositif DIS de fonction physiquement non clonable.

Le substrat dans et sur lequel sont réalisés les différents dispositifs DIS peut être un substrat massif ou bien un substrat du type silicium sur isolant (SOI : Silicon On Insulator).

Par ailleurs, le dispositif DIS est ici réalisé dans une technologie CMOS 45 nanomètres, bien que cet exemple ne soit aucunement limitatif.

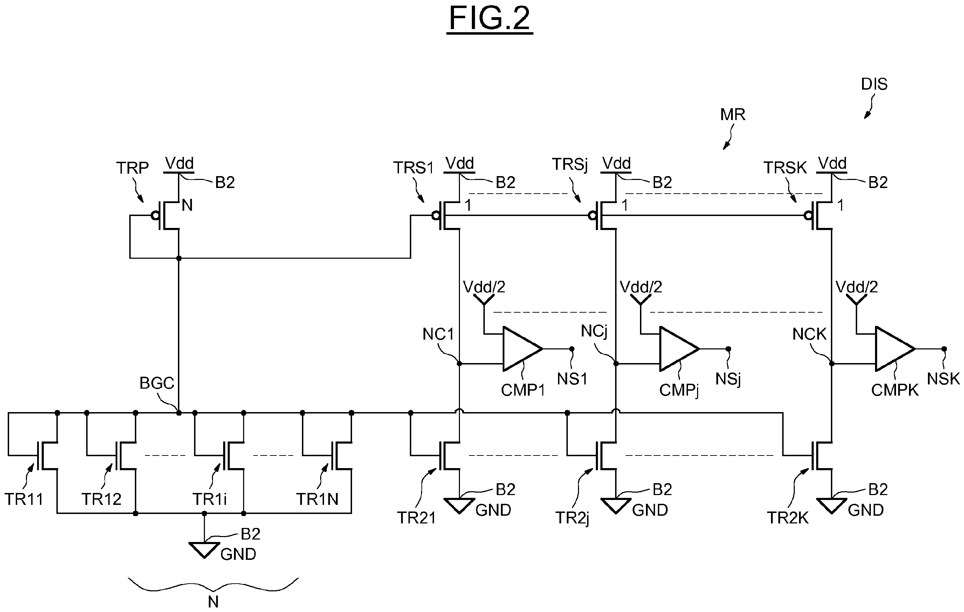

La figure 2 illustre schématiquement un mode de réalisation possible d'un dispositif DIS de fonction physiquement non clonable.

Ce dispositif DIS comprend ici un ensemble de transistors MOS TR1i, TR2j présentant une distribution aléatoire de tension de seuil respective.

Cet ensemble de transistors MOS comporte un groupe de N premiers transistors TR11-TR1N et dans cet exemple, K deuxièmes transistors TR21-TR2K qui, comme on le verra plus en détails ci-après, vont permettre de définir les valeurs logiques de K bits d'un code généré en sortie du dispositif de fonction physiquement non clonable DIS.

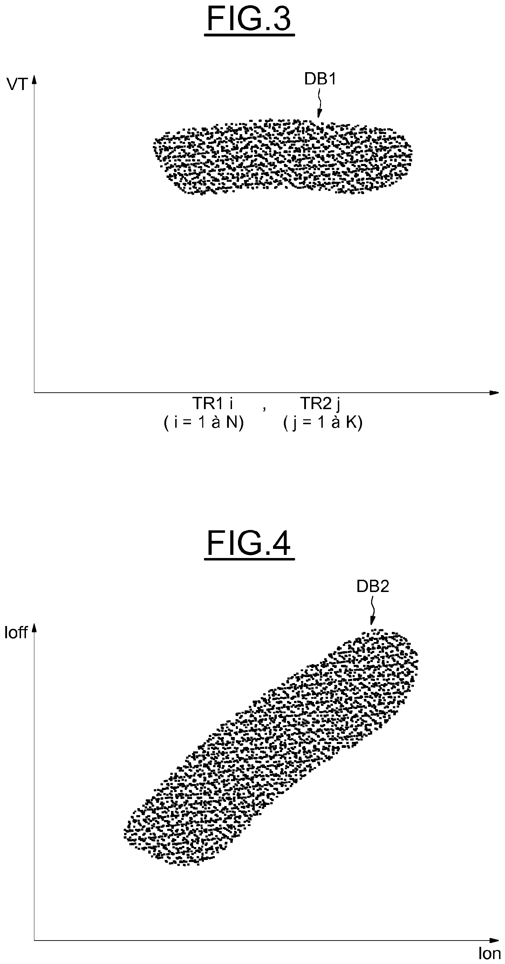

La distribution aléatoire DB1 de tension de seuil VT est illustrée très schématiquement sur la figure 3 et peut se traduire notamment, comme illustré sur la figure 4, par une distribution aléatoire DB2 du rapport Ion/Ioff entre le courant Ion du transistor à l'état passant et le courant Ioff du transistor à l'état bloqué.

Un exemple de procédé d'obtention de telle distribution aléatoire sera décrit plus en détails ci-après.

A titre indicatif, dans l'exemple décrit ici, les valeurs des courants Ion des différents transistors TR1i et TR2j varient autour d'une valeur moyenne de 631 microampères par micromètre avec une déviation de 41%.

Bien entendu, ceci n'est qu'un exemple, et l'invention est compatible avec toute distribution aléatoire de valeurs, quel que soit l'étalement de cette distribution.

Si l'on revient maintenant à la figure 1, on voit que chaque premier transistor TR1i (i variant de 1 à N) est un transistor NMOS agencé selon un montage en diode c'est-à-dire dont la grille est reliée au drain, par, par exemple une métallisation.

Tous les premiers transistors TR1i sont connectés en parallèle entre une borne commune BGC et une borne d'alimentation de référence B2 destinée à recevoir une tension d'alimentation de référence, par exemple la masse GND.

Le groupe de premiers transistors TR1i est couplé aux deuxièmes transistors TR2j (j=1 à K) par des premiers moyens de couplage et des noeuds communs NCj (j variant de 1 à K).

En d'autres termes, il y autant de noeuds communs qu'il y a de deuxièmes transistors TR2j.

Les premiers moyens de couplage comportent ici des liaisons, par exemple par des métallisations, connectant la borne commune BGC aux grilles des K deuxièmes transistors TR2j.

Chaque deuxième transistor TR2j est par ailleurs couplé entre la borne B2 et le noeud commun correspondant NCj.

Les premiers moyens de couplage comportent également ici un miroir de courant MR connecté entre la borne commune BGC et chacun des noeuds communs NCj.

Le miroir de courant MR comporte ici un transistor principal PMOS référencé TRP dont la source est connectée à une borne d'alimentation B1 destinée à recevoir une tension d'alimentation Vdd. Ce transistor principal TRP est monté en diode avec sa grille reliée à son drain.

Le drain du transistor TRP est connecté à la borne commune BGC.

Le miroir de courant MR comporte également K transistors secondaires TRS1-TRSK connectés chacun entre la borne d'alimentation B1 et le noeud commun correspondant NCj.

Les grilles des transistors secondaires TRSj sont connectées à la grille et au drain du transistor principal TRP.

Le rapport entre la taille du transistor principal TRP et la taille de chaque transistor secondaire TRSj est égal à N, c'est-à-dire au nombre de premiers transistors TR1i.

En pratique, ce rapport de taille peut être obtenu par une taille du transistor TRP effectivement N fois plus importante que la taille d'un transistor secondaire TRSj ou bien par par exemple N transistors principaux de taille 1 et connectés en parallèle.

Le dispositif DIS comporte par ailleurs des deuxièmes moyens de couplage entre chaque noeud commun NCj et un noeud de sortie correspondant NSj dudit dispositif DIS.

Ces deuxièmes moyens de couplage comportent dans cet exemple entre chaque noeud commun NCj et chaque noeud de sortie NSj un comparateur CMPj dont une première entrée est connectée au noeud commun NCj, dont une deuxième entrée est destinée à recevoir une tension de référence égale à la moitié de la tension d'alimentation Vdd et dont la sortie est reliée au noeud de sortie NSj.

Comme on le verra plus en détail ci-après, chaque noeud de sortie va délivrer un signal de sortie dont le niveau va dépendre de la comparaison entre le niveau d'un courant de référence délivré par le transistor secondaire correspondant TRSj et le niveau du courant traversant le deuxième transistor correspondant TR2j.

Et, on pourra alors associer à chaque signal de sortie un bit dont la valeur logique va dépendre du niveau du signal de sortie.

L'ensemble de ces bits va alors former un code unique délivré par le dispositif DIS.

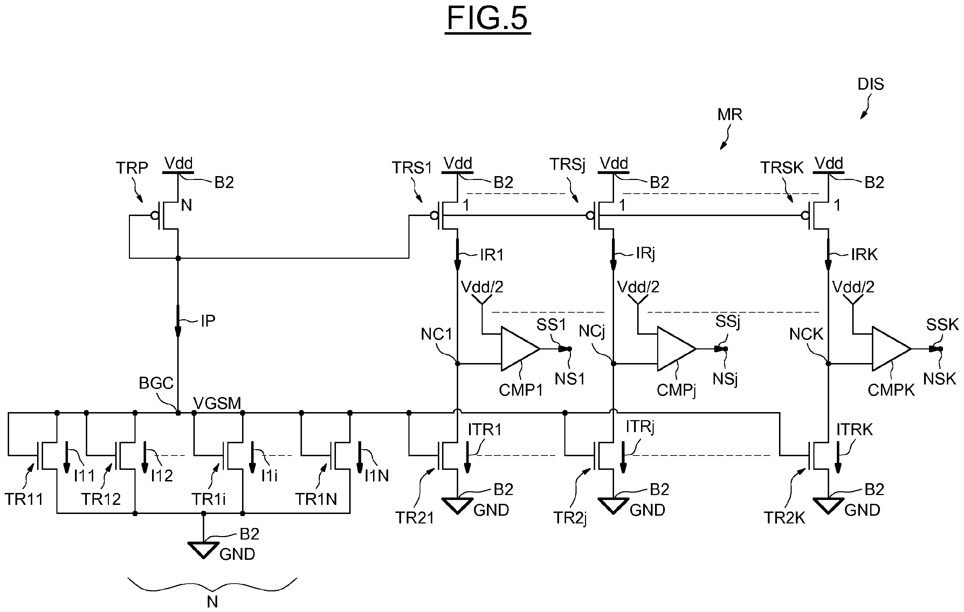

On se réfère maintenant plus particulièrement aux figures 5 à 7 pour illustrer le fonctionnement du dispositif de la figure 2 correspondant à un exemple de génération du code unique par le dispositif DIS.

Si l'on se réfère plus particulièrement à la figure 5, on voit que lorsque le domaine DD du circuit intégré comportant le dispositif DIS est alimenté par la tension d'alimentation Vdd, le transistor principal TRP génère un courant principal IP qui est réparti dans les N premiers transistors TR11-TR1N.

Chaque premier transistor TR1i est donc parcouru par un courant I1i.

Si tous les transistors TTR1i étaient identiques, ces courants I1i seraient identiques. Cependant, comme ces transistors présentent une distribution aléatoire de tensions de seuil, ces courants I1i sont différents.

Cette répartition du courant principal dans les N premiers transistors TR1i génère pour chaque premier transistor, et donc au niveau de la borne commune BGC, une première tension grille source moyenne VGSM.

Cette tension grille source moyenne VGSM polarise la grille de chaque deuxième transistor TR2j. Bien entendu, cette tension VGSM est supérieure à la tension de seuil des transistors.

Chaque deuxième transistor TR2j est traversé par un courant ITRj.

Par ailleurs, de par le miroir de courant MR, chaque transistor secondaire TRSj délivre au noeud commun correspondant NCj un courant de référence IRj.

Ce courant de référence IRj, également dénommé ci-après courant de base, est identique pour chaque transistor TRSj et correspond à 1/Nème du courant principal IP.

On notera également que le courant IP correspond à la somme des N courants I1i traversant les N premiers transistors TR1i.

Par conséquent, 1/Nème de ce courant IP représente la moyenne des courants traversant les N premiers transistors TR1i.

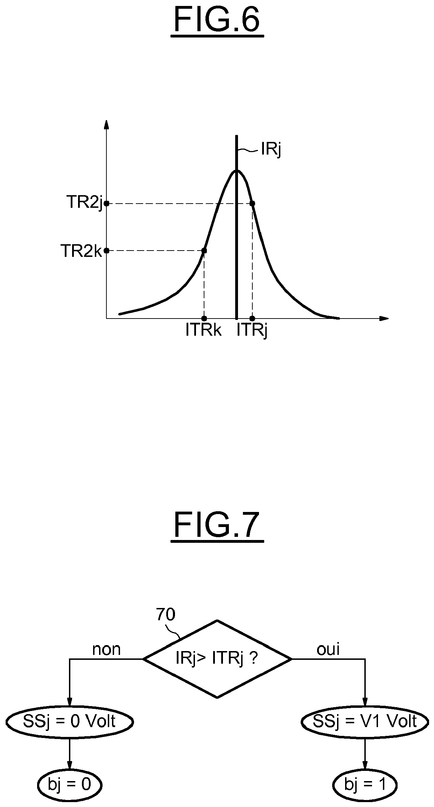

Compte tenu de la distribution aléatoire des tensions de seuil de l'ensemble des transistors TR1i et TR2j, le courant traversant un deuxième transistor TR2k ou TR2j peut se situer, comme illustré sur la figure 6, d'un côté ou de l'autre du courant de référence IRj.

Ainsi, si par exemple le transistor TR2k tire le courant ITRk dont le niveau est inférieur au niveau du courant de référence IRj, le noeud commun correspondant NCk monte à une tension supérieure à Vdd/2.

Si par contre le courant ITRj traversant le deuxième transistor TR2j a un niveau qui est supérieur au niveau du courant de référence IRj, alors la tension du noeud commun correspondant NCj descend en dessous de Vdd/2.

Ainsi, comme illustré sur la figure 7, le comparateur CMPj vérifie si le courant ITRj traversant le deuxième transistor correspondant TR2j est inférieur ou non au courant de référence IRj qui est le même pour tous les transistors secondaires TRS1-TRSK.

Si tel est le cas, alors le signal de sortie SSj délivré au noeud de sortie NSj a une tension de V 1 volt tandis que dans le cas contraire il a une tension nulle.

Dans le premier cas, la valeur du bit bj correspondant du code délivré par la fonction physiquement non clonable est égale à 1 tandis qu'elle est égale à 0 dans le deuxième cas.

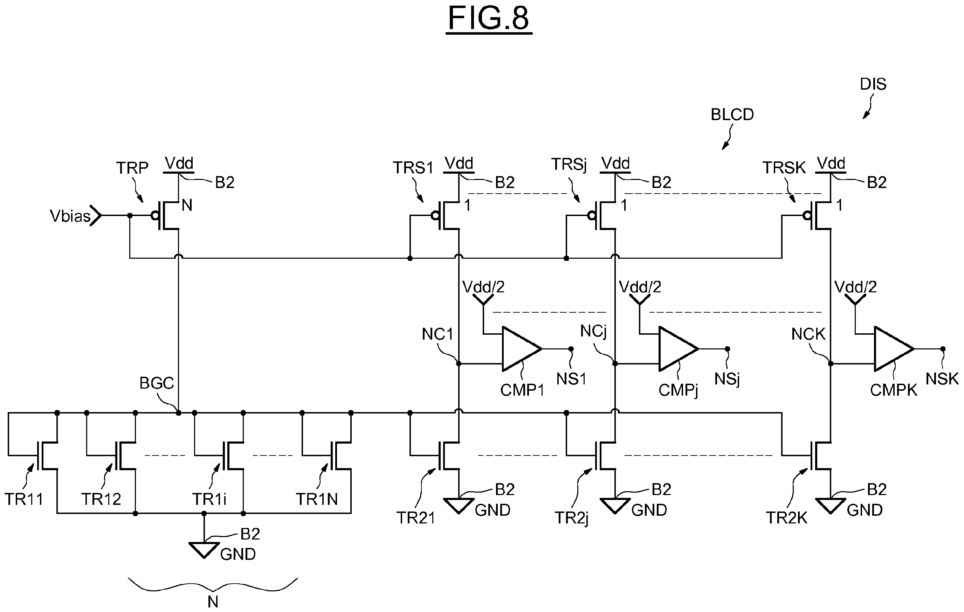

Le mode de réalisation du dispositif DIS illustré sur la figure 8 diffère de celui illustré sur la figure 2 en ce sens que le miroir de courant du dispositif de la figure 2 est remplacé par un bloc diviseur de courant BLCD.

Ce bloc diviseur de courant comporte le transistor principal TRP et des transistors auxiliaires TRS1-TRSK dans un rapport de taille de N pour 1. Cependant, dans ce bloc BLCD, les grilles des transistors PMOS TRP et TRS1-TRSK sont toutes reliées et destinées à être polarisées par une tension de polarisation Vbias qui peut être typiquement égale à Vdd moins une valeur fixe de tension, par exemple 1 volt.

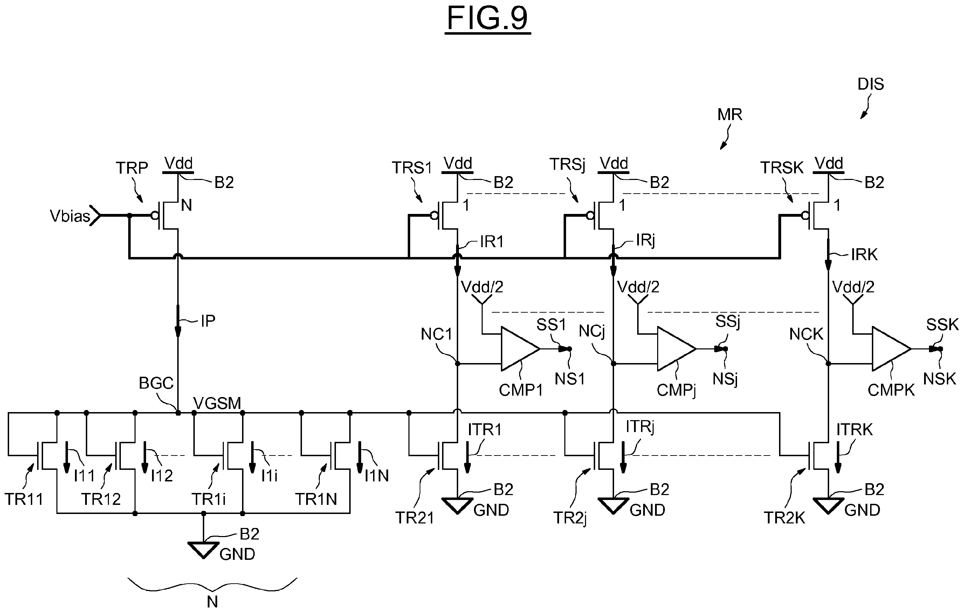

On se réfère maintenant à la figure 9 pour décrire le fonctionnement du dispositif de la figure 8.

Ce fonctionnement est essentiellement semblable à celui qui a été décrit en référence à la figure 5.

Plus précisément, lorsque le dispositif est alimenté par la tension d'alimentation Vdd et les grilles des transistors du bloc diviseur de courant polarisées par la tension Vbias, le transistor principal TRP impose le courant principal IP qui est réparti dans les N premiers transistors TR11-TR1N. La première tension grille source moyenne VGSM polarise les grilles des deuxièmes transistors TR21-TR2K.

Ceux-ci sont traversés par des courants ITRj et le courant de référence IRj délivré à chaque noeud commun NCj est identique et égal au courant de base correspondant là encore à 1/Nème du courant principal IP.

Cependant, à la différence du mode de réalisation précédent, ce mode de réalisation permet, de par la tension de polarisation Vbias, d'ajuster la valeur du courant IP et donc de diminuer la consommation du dispositif.

Par ailleurs, la valeur du courant IP permet d'ajuster également la valeur de la première tension grille source moyenne VGSM qui, lorsqu'elle se rapproche de la tension de seuil des transistors TR21-TR2K, permet d'élargir la distribution de valeurs des courants individuels ITRj traversant les deuxièmes transistors TR2j.

Ceci donne un degré supplémentaire de variabilité pour le dispositif de fonction physiquement non clonable DIS.

La détermination de la valeur des bits du code numérique délivré par le dispositif DIS de la figure 8 est analogue à ce qui a été expliqué en référence à la figure 7.

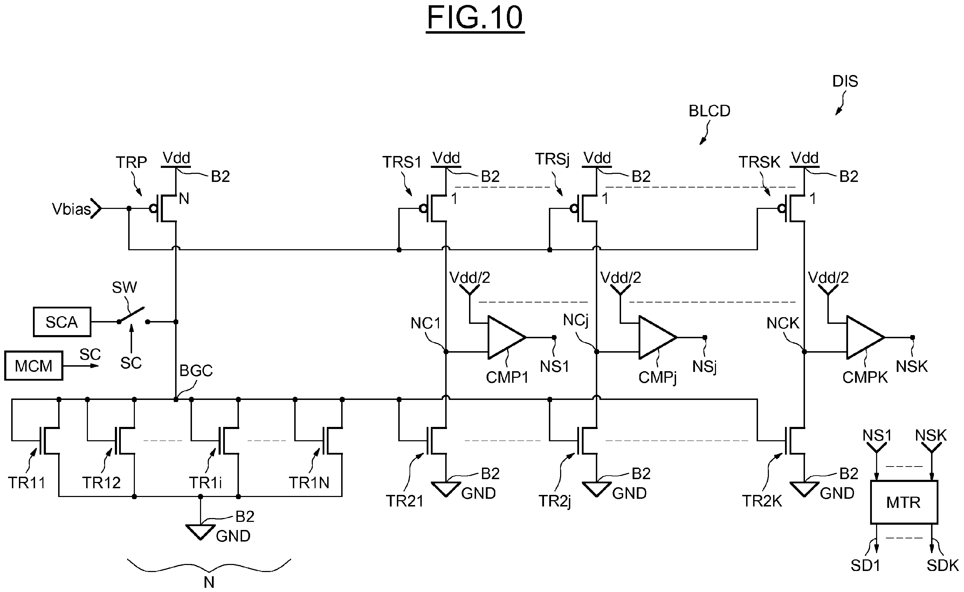

On se réfère maintenant plus particulièrement à la figure 10 pour illustrer un autre mode de réalisation du dispositif DIS de fonction physiquement non clonable.

Ce mode de réalisation diffère de celui de la figure 8 par le fait que les premiers moyens de couplage comprennent en outre une source de courant auxiliaire SCA commandable par un signal de commande SC délivré par des moyens de commande MCM et capable de délivrer sur la borne commune BGC un courant auxiliaire ou le courant auxiliaire opposé.

Lorsque la source de courant auxiliaire SCA est désactivée (correspondant schématiquement à l'interrupteur SW ouvert) les premiers moyens de couplage sont alors dans un premier état qui correspond à celui illustré sur la figure 8.

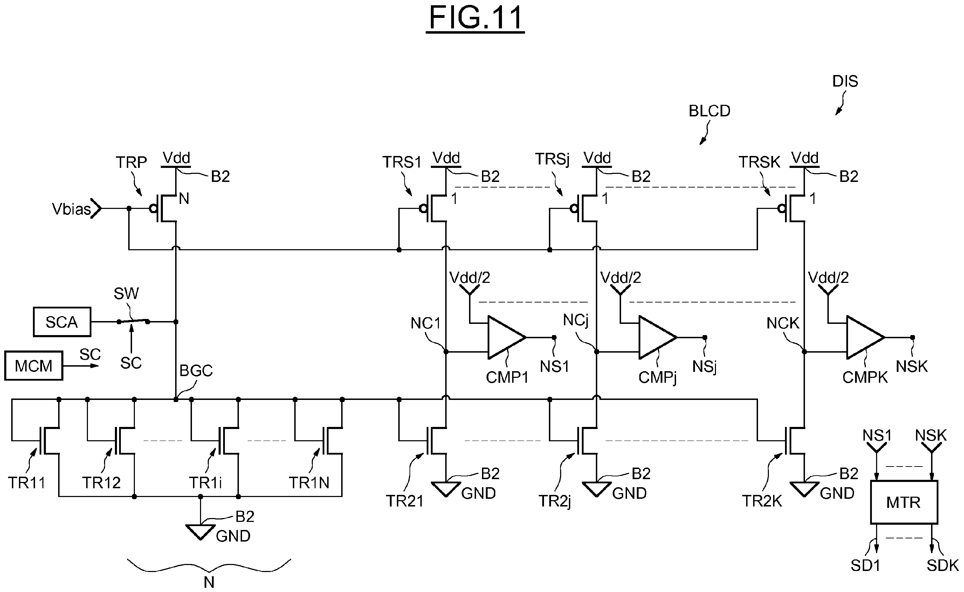

Par contre, lorsque la source de courant auxiliaire SCA est activée (correspondant à l'interrupteur SW fermé), les premiers moyens de couplage sont alors dans un deuxième état comme illustré sur la figure 11.

Ce mode de réalisation des figures 10 et 11 permet de détecter des bits du code numérique délivré par le dispositif DIS dont les valeurs pourraient ne pas être stables et répétables.

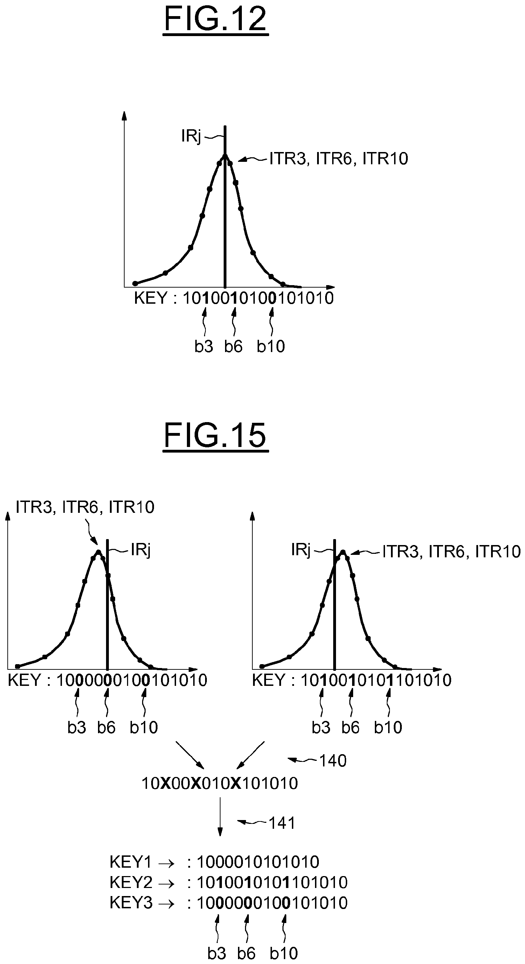

En effet, comme illustré sur la figure 12, lorsque le dispositif DIS est dans son premier état (figure 10) ou lorsqu'il n'est pas équipé du tout d'une source de courant auxiliaire SCA, il se peut très bien que pour certains deuxièmes transistors, les courants ITRj les traversant aient des niveaux proches du niveau du courant de référence IRj.

Dans ce cas, les caractéristiques du comparateur CMPj peuvent conduire à des comparaisons donnant des valeurs instables ou non répétables d'une mise sous tension à une autre.

C'est le cas par exemple comme illustré sur la figure 12, pour les bits b3, b6 et b10 pour lesquels les courants ITR3, ITR6 et ITR10 traversant les deuxièmes transistors TR23, TR26 et TR210 ont des valeurs très proches de la valeur du courant de référence IRj.

Comme illustré sur la figure 12, théoriquement, les valeurs logique de ces bits b3, b6 et b10 valent respectivement 1, 1, 0.

Cependant, ces valeurs logiques peuvent basculer d'une mise sous tension à une autre par exemple en raison de l'instabilité de comparaison.

Le mode de réalisation des figures 10 et 11 prévoyant l'utilisation d'une source de courant auxiliaire SCA permet de détecter ces bits et de prendre une décision quant à la gestion de leur valeur.

Ceci peut être effectué avantageusement lors de la première mise sous tension du dispositif DIS.

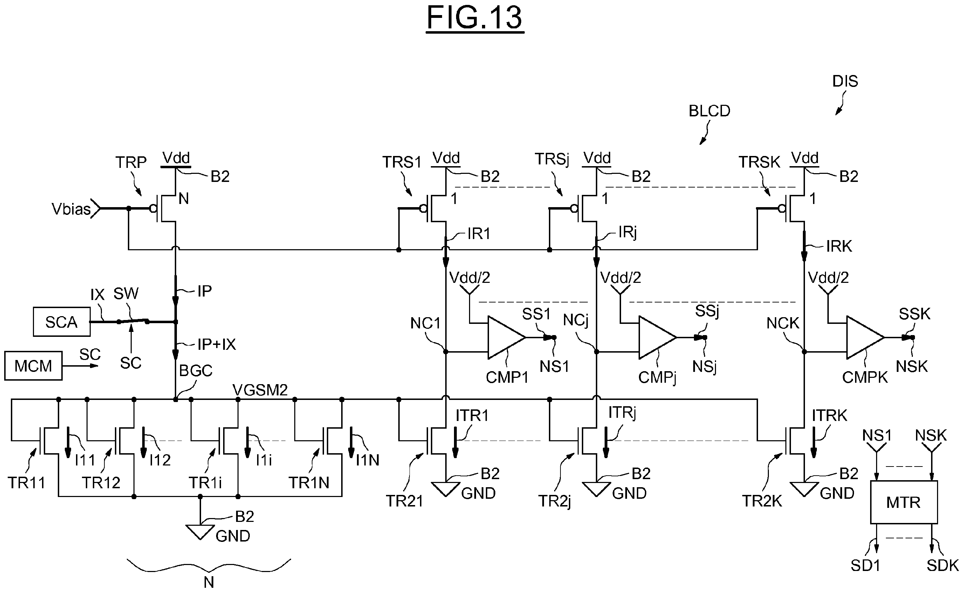

A cet égard, comme illustré sur la figure 13, lors de cette première mise sous tension, la source de courant auxiliaire SCA va être commandée pour délivrer un courant auxiliaire IX qui va se superposer au courant principal IP, ce courant superposé étant réparti dans les N premiers transistors TR11-TR1N.

Ceci va donc générer une deuxième tension grille source moyenne VGSM2 qui va polariser les grilles des deuxièmes transistors TR21 - TR2K.

Par contre, la valeur du courant de référence IRj reste toujours égale à la valeur du courant de base correspondant à 1 N/ème du courant principal IP.

Mais, du fait de ce décalage de courant au niveau du courant principal IP, la distribution des courants traversant les deuxièmes transistors TR21-TR2K va être décalée à gauche de la valeur du courant de référence IRj comme illustré sur la partie supérieure gauche de la figure 15.

De ce fait, les valeurs logiques des bits b3, b6 et b10 valent par conséquent 0.

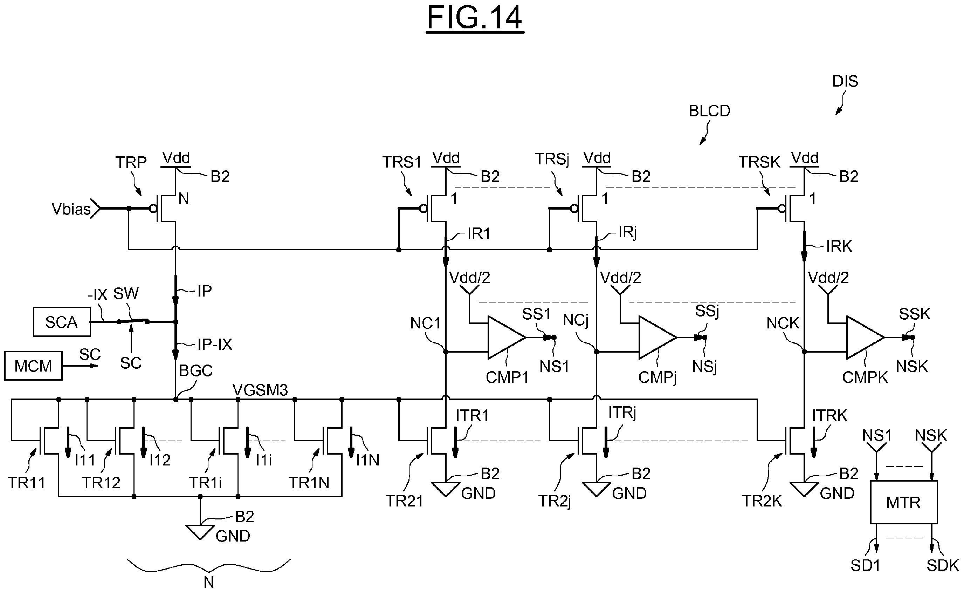

On procède ensuite, comme illustré sur la figure 14 à un décalage au niveau du courant principal IP dans l'autre sens.

En d'autres termes, la source de courant auxiliaire SCA est alors commandée de façon à délivrer l'opposé -IX du courant auxiliaire IX.

De ce fait, le courant superposé qui va se répartir dans les N premiers transistors TR11-TR1N est égal à IP-IX générant une tension grille source moyenne VGSM3 à la borne commune BGC.

Là encore, le niveau du courant de référence IRj reste égal au courant de base correspondant à 1/Nème du courant principal IP.

Cependant, comme illustré sur la partie supérieure droite de la figure 15, la distribution des courants individuels ITRj traversant les deuxièmes transistors TR2j est cette fois-ci décalée à droite du courant de référence IRj conférant donc aux bits b3, b6 et b10 les valeurs logiques 1.

Des moyens de traitement MTR (figures 10, 11, 13 et 14) vont alors comparer le code numérique KEY délivré aux noeuds de sortie NSj du dispositif DIS, bit à bit, de façon à repérer les bits dont les valeurs logiques ont changé entre un décalage à droite et un décalage à gauche de la distribution.

Ces moyens de traitement effectuent, comme illustré sur la figure 15, cette comparaison dans l'étape 140 et délivrent des signaux de comparaison SDj (figures 10, 11, 13 et 14) représentatifs des résultats de cette comparaison.

A cet égard, les moyens de traitement peuvent comporter des circuits logiques.

Les bits b3, b6 et b10 ont dans cet exemple été repérés et sont marqués par des croix.

Puis, les moyens de traitement prennent une décision quant à la gestion de ces bits instables (étape 141 figure 15).

A cet égard, trois solutions sont par exemple possibles.

Une première solution consiste à ne pas prendre en compte ces bits instables dans le code numérique délivré par le dispositif DIS.

Dans ce cas, le code numérique KEY1 ne comportera pas les bits b3, b6 et b10.

Une autre solution consiste à conférer une valeur logique arbitraire à ces bits b3, b6 et b10.

Ainsi, si l'on confère la valeur logique 1 à ces bits instables, on obtiendra alors le code numérique KEY2 tandis que si l'on confère la valeur logique 0 à ces bits, on obtiendra le code numérique KEY3.

Il est aussi possible choisir comme solution, une combinaison arbitraire des trois solutions précédentes.

Et, cette décision va être mémorisée dans le dispositif DIS.

A l'issue de cette prise de décision, le dispositif DIS peut être alors replacé dans son premier état correspondant à celui illustré sur la figure 10 et la décision prise quant au bit instable reste mémorisée et valable pour la suite.

Elle sera également valable lors de toutes les mises sous tension ultérieures pour lesquelles il ne sera plus nécessaire de placer le dispositif DIS dans son deuxième état pour procéder à des décalages de courant.

On obtient alors un code numérique parfaitement répétable d'une mise sous tension à une autre.

Alors que dans le mode de réalisation de la figure 10, et de la figure 11, on connecte la source de tension SCA au niveau de la borne commune BGC, ce qui est particulièrement simple à réaliser, il serait toutefois possible en variante de connecter une source de tension auxiliaire SCA au niveau du drain de chaque transistor PMOS secondaire TRSj (figure 16).

Et, dans ce cas, ce serait le courant de référence qui serait cette fois décalé pour, le dispositif DIS étant alors placé dans un troisième état, délivrer successivement un courant de référence égal au courant de base IRj augmenté du courant auxiliaire IX ou bien diminué de ce courant auxiliaire IX.

Et le résultat de la détection des bits instables serait alors analogue à ce qui a été décrit ci-avant.

Bien entendu, alors que l'on vient de décrire dans le deuxième ou le troisième état, une délivrance par la source de courant auxiliaire d'un courant auxiliaire IX puis de son opposé, il serait tout à fait envisageable de délivrer d'abord l'opposé du courant auxiliaire puis le courant auxiliaire.

Le code numérique généré par le dispositif DIS est indépendant des conditions de température et de vieillissement puisque tous les transistors de ce dispositif DIS sont soumis aux mêmes variations de température et au même vieillissement et que de toute façon, la polarisation des grilles des transistors secondaires et la génération du courant de référence résultent d'une moyenne des courants parcourant les différents transistors présentant une tension de seuil aléatoirement modifiée.

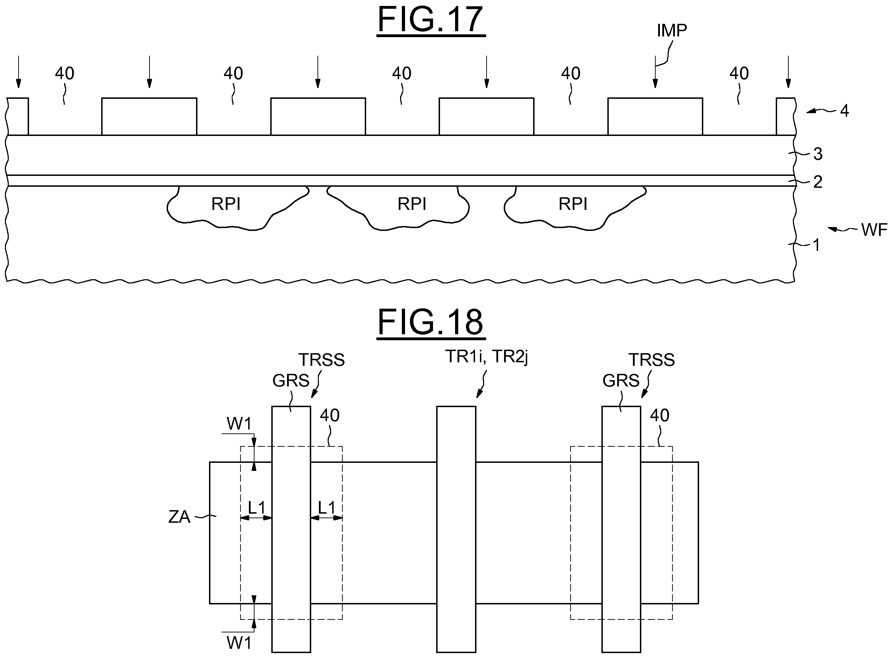

On se réfère maintenant plus particulièrement aux figures 17 à 19 pour illustrer un exemple non limitatif de procédé de réalisation d'un dispositif DIS permettant d'obtenir de façon simple une distribution aléatoire de tensions de seuil.

Comme illustré sur la figure 17, le procédé de réalisation comporte après formation sur le substrat de l'ensemble de la plaque semiconductrice WF d'une couche diélectrique 2, par exemple du dioxyde de silicium, la formation d'une couche de polysilicium (silicium polycristallin) 3.

Le procédé comporte également une formation sur cette couche de polysilicium 3 d'un masque 4, par exemple un masque de résine, comportant des ouvertures 40.

Comme illustré sur la figure 18, ces ouvertures 40 se situent à côté des futurs premiers transistors TR1i et des futurs deuxièmes transistors TR2i.

On procède alors à une implantation initiale IMP, dans le substrat de la plaquette WF, de dopants ayant le même type de conductivité que les régions de source et de drain de l'ensemble des futurs premiers transistors et deuxièmes transistors MOS.

Ainsi, si les premiers transistors et les deuxièmes transistors sont des transistors NMOS, on pourra procéder par exemple à une implantation d'arsenic ou de phosphore tandis que si les premiers et les deuxièmes transistors MOS sont des transistors PMOS, on pourra procéder à une implantation de bore.

Les régions du substrat 1 de la plaquette semiconductrice situées sous une région de la couche de polysilicium 3 protégée par la résine ne subissent pas directement l'implantation de dopants IMP.

Par contre, de par la présence de la structure cristalline du polysilicium, des joints de drain et de l'orientation des grains, l'implantation de dopants IMP se traduit par une implantation latérale tiltée typiquement d'un angle inférieur à 45°, dans les régions du substrat situées à côté des ouvertures 40.

On obtient donc comme illustré sur la figure 17 des régions implantées initiales RPI débordant de chaque côté des parties découvertes de la couche de polysilicium 3.

On procède alors à un retrait du masque 4 et une formation des transistors MOS de façon classique et connue, à côté desdites parties découvertes de polysilicium de façon à ce que, comme illustré sur la figure 18, chaque premier ou deuxième transistor TR1i ait dans le substrat une zone active incorporant une partie d'une région implantée initiale.

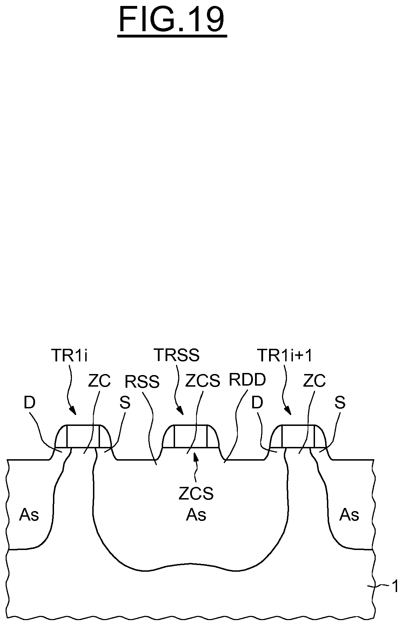

En fait, comme on le voit sur la figure 19, du fait de l'implantation initiale IMP, par exemple avec de l'arsenic, la région de canal ZC du transistor MOS TR1i par exemple, a reçu une partie des implants initiaux d'arsenic et sa longueur a par conséquent été modifiée par rapport à un transistor standard, ce qui a conduit à une modification de sa tension de seuil.

Et, comme lors de la formation de la couche de polysilicium, la taille des grains, leur localisation, leur orientation et les joints de grains ont été obtenus de façon aléatoire, l'implantation initiale de dopants à travers la couche de polysilicium a modifié de façon aléatoire les tensions de seuil de tous les premiers et deuxièmes transistors.

On le voit par exemple sur la figure 19 sur laquelle la zone de canal ZC du premier transistor voisin TR1i+1 est différente de la zone de canal du premier transistor TR1i.

On a donc assuré ici une distribution aléatoire des tensions de seuil de ces transistors.

Par ailleurs, lors de la fabrication classique des transistors MOS, les parties de la couche de polysilicium 3 qui ont été exposées à l'implantation à travers les ouvertures 40 ont conduit à la formation de grilles de transistor supplémentaires TRSS situées entre deux transistors à tension de seuil modifiée. Et, compte tenu de cette implantation initiale, ces transistors supplémentaires sont devenus des transistors toujours passants puisque leur région de canal ZCS contient des dopants de même type que ceux de leurs régions de source RSS et de drain RDD.

Et, leur présence rend plus difficile la détectabilité de la présence de la fonction physiquement non clonable au sein du circuit intégré puisque vu de dessus, on ne peut pas savoir si le transistor TRSS est un transistor classique ou un transistor « fictif » toujours passant.

Bien entendu, alors qu'il serait possible de modifier de façon aléatoire la tension de seuil d'un transistor MOS en ne plaçant une ouverture que d'un seul côté de ce futur transistor MOS, il est préférable d'encadrer le transistor MOS par deux transistors supplémentaires résultant d'une implantation tiltée de chaque côté de ce premier ou de ces deuxièmes transistors MOS. Ceci permet d'élargir encore la distribution aléatoire de tensions de seuil.

A titre indicatif, comme illustré sur la figure 18, la taille de l'ouverture des vignettes est compatible avec la hauteur de la couche de polysilicium de façon à obtenir cette implantation tiltée. A titre indicatif, dans la technologie 45 nanomètres, et avec des grains pouvant avoir des longueurs variant de 50 à 80 nanomètres, on pourra choisir une ouverture 40 débordant de la zone active ZA des transistors d'une largeur W1 de l'ordre de 70 nanomètres et débordant de la future grille GRS du transistor supplémentaire TRS d'une longueur L1 de 70 nanomètres. On pourra également choisir des énergies d'implantation variant de 30 keV à 110 keV pour de l'arsenic ou du phosphore (par exemple 50 keV) ou de 10 keV à 50 keV pour du bore (par exemple 20 keV).

L'invention n'est pas limitée aux modes de mise en oeuvre et de réalisation qui viennent d'être décrits mais en embrasse toutes les variantes.

Ainsi les premiers transistors TR1i et les deuxièmes transistors TR2j peuvent être des transistors PMOS.

Les transistors TRP et TRSj du miroir de courant MP ou du bloc diviseur de courant BLCD peuvent être des transistors classiques ou bien à tension de seuil modifiée aléatoirement.

Les transistors TR1i et TR2j peuvent être avantageusement regroupés au sein du circuit intégré.

## Revendications

1. Circuit intégré comprenant au moins un domaine (DD) comportant un dispositif de fonction physiquement non clonable (DIS), ledit dispositif (DIS) comprenant un ensemble de transistors MOS (TR1i, TR2j) présentant une distribution aléatoire de tensions de seuil respectives, des premiers moyens de couplage (MR, BLCD) couplant un groupe de N premiers transistors (TR1i) dudit ensemble et au moins un deuxième transistor (TR2j) dudit ensemble via au moins un noeud commun (NCj), des deuxièmes moyens de couplage (CMPj) entre chaque noeud commun (NCj) et un noeud de sortie correspondant (NSj) de ladite fonction, les premiers moyens de couplage étant configurés pour prendre au moins un premier état dans lequel ils sont aptes, lorsque ledit domaine est alimenté, à générer un courant principal (IP) et à répartir le courant principal dans les N premiers transistors de façon à générer pour chaque premier transistor une première tension grille source moyenne (VGSM), à polariser la grille de chaque deuxième transistor (TR2j) par ladite première tension grille source moyenne, et à délivrer à chaque noeud commun un courant de référence (IRj) égal à un courant de base correspondant à 1/N^{ème} du courant principal, et les deuxièmes moyens de couplage (CMPj) sont configurés pour délivrer à chaque noeud de sortie un signal de sortie (SSj) dont le niveau dépend d'une comparaison entre le niveau du courant de référence (IRj) et le niveau du courant (ITRj) traversant le deuxième transistor correspondant (TR2j).

2. Circuit intégré selon la revendication 1, dans lequel les premiers moyens de couplage sont configurables et capables de prendre en outre sur commande un deuxième état dans lequel ils sont aptes, lorsque ledit domaine (DD) est alimenté, à générer successivement un premier courant superposé (IP+IX) résultant d'une superposition du courant principal et d'un courant auxiliaire puis un deuxième courant superposé (IP-IX) résultant d'une superposition du courant principal et du courant auxiliaire opposé, ou le deuxième courant puis le premier courant à répartir successivement chacun des courants superposés dans les N premiers transistors (TR1i) de façon à générer pour chaque premier transistor une deuxième tension grille source moyenne correspondante (VGSM2), à polariser la grille de chaque deuxième transistor par ladite deuxième tension grille source moyenne correspondante, et à délivrer à chaque noeud commun ledit courant de référence égal audit courant de base.

3. Circuit intégré selon la revendication 1, dans lequel les premiers moyens de couplage sont configurables et capables de prendre en outre sur commande un troisième état dans lequel ils sont aptes, lorsque ledit domaine (DD) est alimenté, à générer ledit courant principal (IP), à répartir le courant principal dans les N premiers transistors de façon à générer pour chaque premier transistor ladite première tension grille source moyenne, à polariser la grille de chaque deuxième transistor par ladite première tension grille source moyenne (VGSM), et à délivrer successivement à chaque noeud commun en tant que courant de référence un premier courant résultant d'une superposition dudit courant de base et d'un courant auxiliaire (IX) puis un deuxième courant résultant d'une superposition dudit courant de base et du courant auxiliaire opposé (-JX), ou le deuxième courant puis le premier courant.

4. Circuit intégré selon la revendication 2 ou 3, dans lequel le dispositif comprend des moyens de commande (MCM) configurés pour placer les premiers moyens de couplage dans leur deuxième ou leur troisième état et des moyens de traitement (MTR) configurés pour analyser au niveau de chaque noeud de sortie la valeur du signal de sortie associée audit courant auxiliaire et la valeur du signal de sortie associées au courant auxiliaire opposé, et en cas de discordance entre les deux valeurs logiques du bit correspondant du code numérique respectivement associées à ces deux valeurs de signal de sortie, prendre une décision quant à la gestion du bit correspondant du code numérique.

5. Circuit intégré selon la revendication 4, dans lequel les moyens de commande (MCM) sont configurés pour placer les premiers moyens de couplage dans leur deuxième ou leur troisième état lors de la première mise sous tension dudit domaine, et pour placer les premiers moyens de couplage dans leur premier état lors de la première mise sous tension postérieurement à leur placement dans le deuxième état ou le troisième état, et lors de toute mise sous tension ultérieure, ladite décision prise lors de la première mise sous tension étant valable pour toute mise sous tension ultérieure.

6. Circuit intégré selon la revendication 4 ou 5, dans lequel les moyens de traitement (MTR) sont configurés pour prendre ladite décision parmi les décisions suivantes ou une combinaison des décisions suivantes : une non prise en compte du bit correspondant dans le code numérique ou une fixation d'une valeur logique arbitraire pour ce bit.

7. Circuit intégré selon l'une des revendications 2 à 6, dans lequel les premiers moyens de couplage comprennent en outre une source de courant auxiliaire (SCA) commandable configurée pour générer ledit courant auxiliaire (IX) ou le courant auxiliaire opposé (-IX).

8. Circuit intégré selon l'une des revendications précédentes, dans lequel les premiers moyens de couplage sont configurés pour agencer chaque premier transistor (TR1i) selon un montage en diode, connecter tous les premiers transistors (TR1i) en parallèle, et connecter les grilles des premiers transistors (TR1i) à la grille de chaque deuxième transistor (TR2j), et comportent dans leur premier état un bloc diviseur de courant connecté entre les grilles des premiers transistors et chaque noeud commun.

9. Circuit intégré selon la revendication 8, dans lequel le bloc diviseur de courant comprend un miroir de courant (MR) connecté entre les N premiers transistors et chaque noeud commun.

10. Circuit intégré selon la revendication 8, dans lequel le bloc diviseur de courant comprend un transistor principal (TRP) connecté aux grilles des premiers transistors (TR1i) et destiné à imposer ledit courant principal (IP) et à être polarisé sur sa grille par une tension de polarisation (Vbias), et un transistor secondaire (TRSj) connecté à chaque noeud commun (NCj), dont la grille est connectée à la grille du transistor principal et configuré pour fournir au noeud commun correspondant ledit courant de base.

11. Circuit intégré selon les revendications 7 et 10, dans lequel la source de courant auxiliaire commandable (SCA) est couplée aux grilles des premiers transistors.

12. Circuit intégré selon l'une des revendications précédentes, dans lequel ledit domaine comprend au moins un transistor supplémentaire (TRSS) à côté de chaque transistor MOS (TR1i, TR2j) dudit ensemble dont la région de canal (ZCS) comprend des dopants de même type de conductivité que les dopants des régions de source (SS) et de drain (DD) dudit au moins un transistor supplémentaire (TRSS).

13. Circuit intégré selon la revendication 12, dans lequel chaque transistor MOS dudit ensemble est encadré par deux transistors supplémentaires (TRSS).

14. Circuit intégré selon l'une des revendications précédentes, dans lequel N est supérieur à 10.

15. Procédé de réalisation d'un dispositif de fonction physiquement non clonable au sein d'un domaine d'un circuit intégré, comprenant une réalisation au sein dudit domaine (DD) d'un ensemble de transistors MOS (TR1i, TR2j) présentant une distribution aléatoire de tensions de seuil respectives, un premier couplage d'un groupe de N premiers transistors (TR1i) dudit ensemble et d'au moins un deuxième transistor (TR2j) dudit ensemble via au moins un noeud commun (NCj), un deuxième couplage entre chaque noeud commun et un noeud de sortie correspondant (NSj) dudit dispositif, le premier couplage étant configuré pour, lorsque ledit domaine est alimenté, générer un courant principal (IP) et éventuellement un courant auxiliaire (IX) ou le courant auxiliaire opposé (-IX), répartir le courant principal ou le courant principal superposé au courant auxiliaire ou au courant auxiliaire opposé dans les N premiers transistors de façon à générer pour chaque premier transistor une tension grille source moyenne correspondante, à polariser la grille de chaque deuxième transistor par ladite tension grille source moyenne correspondante, et délivrer à chaque noeud commun un courant de référence (IRj) égal à un courant de base correspondant à 1/N^{ème} du courant principal ou au courant de base superposé au courant auxiliaire ou au courant auxiliaire opposé, le deuxième couplage étant configuré pour délivrer à chaque noeud de sortie un signal de sortie dont le niveau dépend d'une comparaison entre le niveau du courant de référence et le niveau du courant traversant le deuxième transistor principal correspondant.

16. Procédé selon la revendication 15, dans lequel le premier couplage comprend un montage de chaque premier transistor en diode, un montage de tous les premiers transistors (TR1i) en parallèle, une connexion des grilles des premiers transistors à la grille de chaque deuxième transistor et une réalisation d'un bloc diviseur de courant connecté entre les grilles des premiers transistors et chaque noeud commun.

17. Procédé selon la revendication 16, dans lequel la réalisation du bloc diviseur de courant comprend une réalisation d'un miroir de courant (MR) connecté entre les N premiers transistors et chaque noeud commun.

18. Procédé selon la revendication 16, dans lequel la réalisation du bloc diviseur de courant comprend une réalisation d'un transistor principal (TR) connecté aux grilles des premiers transistors et destiné à imposer ledit courant principal et à être polarisé sur sa grille par une tension de polarisation, et un transistor secondaire (TRSj) connecté à chaque noeud commun, dont la grille est connectée à la grille du transistor principal et configuré pour fournir au noeud commun correspondant ledit courant de référence.

19. Procédé selon l'une des revendications 15 à 18, dans lequel la réalisation dudit ensemble de transistors MOS comprend une formation au-dessus d'un substrat du circuit intégré d'une couche de polysilicium (3), une formation sur ladite couche de polysilicium d'un masque (4) comportant des ouvertures (40), une implantation initiale (IMP) dans le substrat à travers lesdites ouvertures et les parties découvertes de la couche de polysilicium, de dopants ayant le même type de conductivité que les régions de source et de drain de l'ensemble desdits transistors MOS de façon à réaliser des régions implantées initiales (RPI) débordant de chaque côté desdites parties découvertes de polysilicium, un retrait du masque et une formation desdits transistors MOS à côté desdites parties découvertes de polysilicium de sorte que chaque premier ou deuxième transistor MOS (TR1i, TR2j) ait dans le substrat une zone active incorporant au moins une partie d'une région implantée initiale.

20. Procédé selon la revendication 19, dans lequel chaque premier ou deuxième transistor MOS (TR1i, TR2j) est encadré par deux parties découvertes de polysilicium de sorte que chaque premier ou deuxième transistor MOS ait dans le substrat une zone active incorporant de chaque côté au moins une partie d'une région implantée initiale.

21. Procédé selon la revendication 19 ou 20, dans lequel le circuit intégré incorporant ledit dispositif de fonction physiquement non clonable est réalisé au sein d'une plaque semiconductrice (WF) simultanément à d'autres circuits intégrés, ladite couche de polysilicium ainsi que ledit masque sont formés au-dessus du substrat de toute la plaque et ladite implantation initiale de dopants est effectuée pleine plaque.

22. Procédé selon l'une des revendications 15 à 21, dans lequel N est choisi supérieur à 10.

23. Procédé de génération automatique d'un code unique non prédictible à chaque noeud de sortie (NSj) d'un dispositif de fonction physiquement non clonable (DIS) appartenant à un circuit intégré selon l'une des revendications 1 à 14 ou réalisé conformément au procédé selon l'une des revendications 15 à 22, comprenant au moins une mise sous tension du domaine du circuit intégré incorporant ledit dispositif.

24. Procédé selon la revendication 23, comprenant en outre, lorsque le dispositif de fonction physiquement non clonable appartient à un circuit intégré selon l'une des revendications 1 à 14 prise en combinaison avec la revendication 10 ou est réalisé conformément au procédé selon l'une des revendications 15 à 22 prise en combinaison avec la revendication 18, une application de ladite tension de polarisation (Vbias) sur la grille du transistor principal et sur la grille de chaque transistor secondaire.

25. Procédé selon l'une des revendications 23 ou 24, comprenant en outre, lors de la première mise sous tension du domaine (DD) du circuit intégré incorporant le dispositif de fonction physiquement non clonable, une première superposition audit courant principal (IP) d'un courant auxiliaire (IX) et une deuxième superposition audit courant principal du courant auxiliaire opposé (-IX), une analyse de la valeur du signal de sortie délivré par chaque noeud de sortie lors de la première superposition et une analyse de la valeur du signal de sortie délivré par chaque noeud de sortie lors de la deuxième superposition, et en cas de discordance entre les deux valeurs logiques du bit correspondant du code numérique respectivement associées à ces deux valeurs de signal de sortie, une prise de décision quant à la gestion dudit bit, décision valable pour la suite de la première mise sous tension et pour toute mise sous tension ultérieure.

26. Procédé selon la revendication 25, dans lequel ladite prise de décision comprend une non prise en compte du bit correspondant dans le code numérique ou une fixation d'une valeur logique arbitraire pour ce bit, ou une combinaison de ces deux décisions.

## Patentansprüche

1. Integrierte Schaltung, die mindestens eine Domäne (DD) enthält, die eine Vorrichtung mit physikalisch nicht klonbarer Funktion (DIS) aufweist, wobei die Vorrichtung (DIS) eine Einheit von MOS-Transistoren (TR1i, TR2j), die eine Zufallsverteilung von jeweiligen Schwellenspannungen aufweisen, erste Kopplungseinrichtungen (MR, BLCD), die eine Gruppe von N ersten Transistoren (TR1i) der Einheit und mindestens einen zweiten Transistor (TR2j) der Einheit über mindestens einen gemeinsamen Knoten (NCj) koppeln, und zweite Kopplungseinrichtungen (CMPj) zwischen jedem gemeinsamen Knoten (NCj) und einem entsprechenden Ausgangsknoten (NSj) der Funktion enthält, wobei die ersten Kopplungseinrichtungen konfiguriert sind, mindestens einen ersten Zustand anzunehmen, in dem sie, wenn die Domäne gespeist wird, einen Hauptstrom (IP) erzeugen und den Hauptstrom in den N ersten Transistoren verteilen, um für jeden ersten Transistor eine erste mittlere Gate-Source-Spannung (VGSM) zu erzeugen, das Gate jedes zweiten Transistors (TR2j) durch die erste mittlere Gate-Source-Spannung vorspannen, und an jeden gemeinsamen Knoten einen Bezugsstrom (IRj) gleich einem Basisstrom entsprechend dem 1/N-ten Teil des Hauptstroms liefern können, und die zweiten Kopplungseinrichtungen (CMPj) konfiguriert sind, an jeden Ausgangsknoten ein Ausgangssignal (SSj) zu liefern, dessen Pegel von einem Vergleich zwischen dem Pegel des Bezugsstroms (IRj) und dem Pegel des den entsprechenden zweiten Transistor (TR2j) durchquerenden Stroms (ITRj) abhängt.

2. Integrierte Schaltung nach Anspruch 1, wobei die ersten Kopplungseinrichtungen konfigurierbar und fähig sind, außerdem auf Befehl einen zweiten Zustand anzunehmen, in dem sie, wenn die Domäne (DD) gespeist wird, nacheinander einen ersten überlagerten Strom (IP+IX), der aus einer Überlagerung des Hauptstroms und eines Hilfsstroms resultiert, dann einen zweiten überlagerten Strom (IP-IX), der aus einer Überlagerung des Hauptstroms und des gegengerichteten Hilfsstroms resultiert, oder den ersten Strom und dann den zweiten Strom erzeugen, nacheinander jeden der überlagerten Ströme in den N ersten Transistoren (TR1i) verteilen, um für jeden ersten Transistor eine zweite entsprechende mittlere Gate-Source-Spannung (VGSM2) zu erzeugen, das Gate jedes zweiten Transistors durch die entsprechende zweite mittlere Gate-Source-Spannung vorspannen, und an jedem gemeinsamen Knoten den Bezugsstrom gleich dem Basisstrom liefern können.

3. Integrierte Schaltung nach Anspruch 1, wobei die ersten Kopplungseinrichtungen konfigurierbar und fähig sind, außerdem auf Befehl einen dritten Zustand anzunehmen, in dem sie, wenn die Domäne (DD) gespeist wird, den Hauptstrom (IP) erzeugen, den Hauptstrom in den N ersten Transistoren verteilen, um für jeden ersten Transistor die erste mittlere Gate-Source-Spannung zu erzeugen, das Gate jedes zweiten Transistors durch die erste mittlere Gate-Source-Spannung (VGSM) vorspannen, und nacheinander an jeden gemeinsamen Knoten als Bezugsstrom einen ersten Strom, der aus einer Überlagerung des Basisstroms und eines Hilfsstroms (IX) resultiert, dann einen zweiten Strom, der aus einer Überlagerung des Basisstroms und des gegengerichteten Hilfsstroms (-JX) resultiert, oder den ersten Strom und dann den zweiten Strom liefern können.

4. Integrierte Schaltung nach Anspruch 2 oder 3, wobei die Vorrichtung Steuereinrichtungen (MCM), die konfiguriert sind, die ersten Kopplungseinrichtungen in ihren zweiten oder dritten Zustand zu versetzen, und Verarbeitungseinrichtungen (MTR) enthält, die konfiguriert sind, im Bereich jedes Ausgangsknotens den Wert des dem Hilfsstrom zugeordneten Ausgangssignals und den Wert des dem gegengerichteten Hilfsstrom zugeordneten Ausgangssignals zu analysieren, und im Fall einer Nichtübereinstimmung zwischen den zwei logischen Werten des entsprechenden Bits des digitalen Codes, die diesen zwei Ausgangssignalwerten zugeordnet sind, eine Entscheidung betreffend die Verwaltung des entsprechenden Bits des digitalen Codes zu treffen.

5. Integrierte Schaltung nach Anspruch 4, wobei die Steuereinrichtungen (MCM) konfiguriert sind, beim ersten Anlegen von Spannung an die Domäne die ersten Kopplungseinrichtungen in ihren zweiten oder dritten Zustand zu versetzen, und die ersten Kopplungseinrichtungen beim ersten Anlegen von Spannung nach ihrem Versetzen in den zweiten Zustand oder den dritten Zustand und bei jedem späteren Anlegen von Spannung in ihren ersten Zustand zu versetzen, wobei die beim ersten Anlegen von Spannung getroffene Entscheidung für jedes spätere Anlegen von Spannung gültig ist.

6. Integrierte Schaltung nach Anspruch 4 oder 5, wobei die Verarbeitungseinrichtungen (MTR) konfiguriert sind, die Entscheidung unter den folgenden Entscheidungen oder einer Kombination der folgenden Entscheidungen zu treffen: eine Nichtberücksichtigung der entsprechenden Bits im digitalen Code oder eine Festlegung eines willkürlichen logischen Werts für dieses Bit.

7. Integrierte Schaltung nach einem der Ansprüche 2 bis 6, wobei die ersten Kopplungseinrichtungen außerdem eine steuerbare Hilfsstromquelle (SCA) enthalten, die konfiguriert ist, den Hilfsstrom (IX) oder den gegengerichteten Hilfsstrom (-IX) zu erzeugen.

8. Integrierte Schaltung nach einem der vorhergehenden Ansprüche, wobei die ersten Kopplungseinrichtungen konfiguriert sind, jeden ersten Transistor (TR1i) gemäß einer Diodenschaltung anzuordnen, alle ersten Transistoren (TR1i) parallelzuschalten, und die Gates der ersten Transistoren (TR1i) mit dem Gate jedes zweiten Transistors (TR2j) zu verbinden, und in ihrem ersten Zustand einen Stromteilerblock aufweisen, der zwischen den Gates der ersten Transistoren und jedem gemeinsamen Knoten verbunden ist.

9. Integrierte Schaltung nach Anspruch 8, wobei der Stromteilerblock einen Stromspiegel (MR) enthält, der zwischen den N ersten Transistoren und jedem gemeinsamen Knoten verbunden ist.

10. Integrierte Schaltung nach Anspruch 8, wobei der Stromteilerblock einen Haupttransistor (TRP), der mit den Gates der ersten Transistoren (TR1i) verbunden und dazu bestimmt ist, den Hauptstrom (IP) einzuspeisen und an seinem Gate durch eine Vorspannung (Vbias) vorgespannt zu werden, und einen mit jedem gemeinsamen Knoten (NCj) verbundenen Sekundärtransistor (TRSj) enthält, dessen Gate mit dem Gate des Haupttransistors verbunden und konfiguriert ist, den Basisstrom an den entsprechenden gemeinsamen Knoten zu liefern.

11. Integrierte Schaltung nach den Ansprüchen 7 und 10, wobei die steuerbare Hilfsstromquelle (SCA) mit den Gates der ersten Transistoren gekoppelt ist.

12. Integrierte Schaltung nach einem der vorhergehenden Ansprüche, wobei die Domäne mindestens einen zusätzlichen Transistor (TRSS) neben jedem MOS-Transistor (TR1i, TR2j) der Einheit enthält, dessen Kanalbereich (ZCS) Dotierungen gleichen Leitfähigkeitstyps wie die Dotierungen der Source-(SS) und Drain-Bereiche (DD) des mindestens einen zusätzlichen Transistors (TRSS) enthält.

13. Integrierte Schaltung nach Anspruch 12, wobei jeder MOS-Transistor der Einheit von zwei zusätzlichen Transistoren (TRSS) umrahmt wird.

14. Integrierte Schaltung nach einem der vorhergehenden Ansprüche, wobei N größer ist als 10.

15. Verfahren zur Herstellung einer Vorrichtung mit physikalisch nicht nicht klonbarer Funktion innerhalb einer Domäne einer integrierten Schaltung, das eine Herstellung innerhalb der Domäne (DD) einer Einheit von MOS-Transistoren (TR1i, TR2j), die eine willkürliche Verteilung von jeweiligen Schwellenspannungen aufweist, eine erste Kopplung einer Gruppe von N ersten Transistoren (TR1i) der Einheit und mindestens eines zweiten Transistors (TR2j) der Einheit über mindestens einen gemeinsamen Knoten (NCj), eine zweite Kopplung zwischen jedem gemeinsamen Knoten und einem entsprechenden Ausgangsknoten (NSj) der Vorrichtung enthält, wobei die erste Kopplung konfiguriert ist, um, wenn die Domäne gespeist wird, einen Hauptstrom (IP) und ggf. einen Hilfsstrom (IX) oder den gegengerichteten Hilfsstrom (-IX) zu erzeugen, den Hauptstrom oder den dem Hilfsstrom oder dem gegengerichteten Hilfsstrom überlagerten Hauptstrom in den N ersten Transistoren zu verteilen, um für jeden ersten Transistor eine entsprechende mittlere Gate-Source-Spannung zu erzeugen, das Gate jedes zweiten Transistors durch die entsprechende mittlere Gate-Source-Spannung vorzuspannen, und an jeden gemeinsamen Knoten einen Bezugsstrom (IRj) gleich einem Basisstrom entsprechend dem 1/N-ten Teil des Hauptstroms oder dem dem Hilfsstrom oder dem gegengerichteten Hilfsstrom überlagerten Basisstrom zu liefern, wobei die zweite Kopplung konfiguriert ist, an jeden Ausgangsknoten ein Ausgangssignal zu liefern, dessen Pegel von einem Vergleich zwischen dem Pegel des Bezugsstroms und dem Pegel des den entsprechenden zweiten Haupttransistor durchströmenden Stroms abhängt.

16. Verfahren nach Anspruch 15, wobei die erste Kopplung eine Diodenschaltung jedes ersten Transistors, eine Parallelschaltung aller ersten Transistoren (TR1i), eine Verbindung der Gates der ersten Transistoren mit dem Gate jedes zweiten Transistors und eine Herstellung eines Stromteilerblocks enthält, der zwischen den Gates der ersten Transistoren und jedem gemeinsamen Knoten verbunden ist.

17. Verfahren nach Anspruch 16, wobei die Herstellung des Stromteilerblocks eine Herstellung eines Stromspiegels (MR) enthält, der zwischen den N ersten Transistoren und jedem gemeinsamen Knoten verbunden ist.

18. Verfahren nach Anspruch 16, wobei die Herstellung des Stromteilerblocks eine Herstellung eines Haupttransistors (TR), der mit den Gates der ersten Transistoren verbunden und dazu bestimmt ist, den Hauptstrom einzuspeisen und an seinem Gate durch eine Vorspannung vorgespannt zu werden, und eines mit jedem gemeinsamen Knoten verbundenen Sekundärtransistors (TRSj) enthält, dessen Gate mit dem Gate des Haupttransistors verbunden und konfiguriert ist, an den entsprechenden gemeinsamen Knoten den Bezugsstrom zu liefern.

19. Verfahren nach einem der Ansprüche 15 bis 18, wobei die Herstellung der Einheit von MOS-Transistoren eine Bildung oberhalb eines Substrats der integrierten Schaltung einer Polysiliciumschicht (3), eine Bildung auf der Polysiliciumschicht einer Maske (4), die Öffnungen (40) aufweist, eine Anfangsimplantation (IMP) im Substrat durch die Öffnungen und die unbedeckten Teile der Polysiliciumschicht hindurch, von Dotierungen mit dem gleichen Leitfähigkeitstyp wie die Source- und Drain-Bereiche der Einheit der MOS-Transistoren, um implantierte Anfangsbereiche (RPI) herzustellen, die auf jeder Seite der unbedeckten Teile aus Polysilicium überstehen, ein Entfernen der Maske und eine Bildung der MOS-Transistoren neben den unbedeckten Teilen von Polysilicium enthält, so dass jeder erste oder zweite MOS-Transistor (TR1i, TR2j) im Substrat eine aktive Zone hat, in die mindestens ein Teil eines implantierten Anfangsbereichs eingefügt ist.

20. Verfahren nach Anspruch 19, wobei jeder erste oder zweite MOS-Transistor (TR1i, TR2j) von zwei unbedeckten Teilen von Polysilicium umrandet wird, so dass jeder erste oder zweite MOS-Transistor im Substrat eine aktive Zone hat, in die auf jeder Seite mindestens ein Teil eines implantierten Anfangsbereichs eingefügt ist.

21. Verfahren nach Anspruch 19 oder 20, wobei die integrierte Schaltung, in die die Vorrichtung mit physikalisch nicht klonbarer Funktion eingefügt ist, innerhalb einer Halbleiterplatte (WF) gleichzeitig mit anderen integrierten Schaltungen hergestellt wird, wobei die Polysiliciumschicht sowie die Maske oberhalb des Substrats der ganzen Platte gebildet werden und die Anfangsimplantation von Dotierungen über die ganze Platte durchgeführt wird.

22. Verfahren nach einem der Ansprüche 15 bis 21, wobei N höher als 10 gewählt wird.

23. Verfahren zur automatischen Erzeugung eines nicht vorhersagbaren einzigen Codes an jedem Ausgangsknoten (NSj) einer Vorrichtung mit physikalisch nicht klonbarer Funktion (DIS), die zu einer integrierten Schaltung nach einem der Ansprüche 1 bis 14 gehört oder gemäß dem Verfahren nach einem der Ansprüche 15 bis 22 hergestellt wird, das mindestens ein Anlegen von Spannung an die Domäne der integrierten Schaltung enthält, in die die Vorrichtung eingefügt ist.

24. Verfahren nach Anspruch 23, das außerdem, wenn die Vorrichtung mit physikalisch nicht klonbarer Funktion zu einer integrierten Schaltung nach einem der Ansprüche 1 bis 14 in Kombination mit Anspruch 10 gehört oder gemäß dem Verfahren nach einem der Ansprüche 15 bis 22 in Kombination mit Anspruch 18 hergestellt wird, ein Anlegen der Vorspannung (Vbias) an das Gate des Haupttransistors und an das Gate jedes Sekundärtransistors enthält.

25. Verfahren nach einem der Ansprüche 23 oder 24, das außerdem beim ersten Anlegen von Spannung an die Domäne (DD) der integrierten Schaltung, in die die Vorrichtung mit nicht klonbarer physikalischer Funktion eingefügt ist, eine erste Überlagerung des Hauptstroms (IP) mit einem Hilfsstrom (IX) und eine zweite Überlagerung des Hauptstroms mit dem gegengerichteten Hilfsstrom (-IX), eine Analyse des Werts des von jedem Ausgangsknoten bei der ersten Überlagerung gelieferten Ausgangssignals und eine Analyse des Werts des von jedem Ausgangsknoten bei der zweiten Überlagerung gelieferten Ausgangssignals, und im Fall der Nichtübereinstimmung zwischen den zwei logischen Werten des entsprechenden Bits des digitalen Codes, die je diesen zwei Ausgangssignalwerten zugeordnet sind, eine Entscheidung bezüglich der Verwaltung des Bits enthält, Entscheidung, die für die Folge des ersten Anlegens von Spannung und für jedes spätere Anlegen von Spannung gültig ist.

26. Verfahren nach Anspruch 25, wobei die Entscheidung eine Nichtberücksichtigung des entsprechenden Bits im digitalen Code oder eine Festlegung eines willkürlichen logischen Werts für dieses Bit oder eine Kombination dieser zwei Entscheidungen enthält.

## Claims

1. Integrated circuit comprising at least one domain (DD) comprising a physically unclonable function device (DIS), the said device (DIS) comprising a set of MOS transistors (TR1i, TR2j) exhibiting a random distribution of respective threshold voltages, first coupling means (MR, BLCD) coupling a group of N first transistors (TR1i) of the said set and at least one second transistor (TR2j) of the said set via at least one common node (NCj), second coupling means (CMPj) between each common node (NCj) and a corresponding output node (NSj) of the said function, the first coupling means being configured to take at least one first state in which they are able, when the said domain is powered, to generate a principal current (IP) and to distribute the principal current in the N first transistors so as to generate for each first transistor a first mean gate source voltage (VGSM), to bias the gate of each second transistor (TR2j) by the said first mean gate source voltage, and to deliver to each common node a reference current (IRj) equal to a base current corresponding to 1/N^{th} of the principal current, and the second coupling means (CMPj) are configured to deliver to each output node an output signal (SSj) whose level depends on a comparison between the level of the reference current (IRj) and the level of the current (ITRj) passing through the corresponding second transistor (TR2j).

2. Integrated circuit according to Claim 1, in which the first coupling means are configurable and capable furthermore of taking on command a second state in which they are able, when the said domain (DD) is powered, to successively generate a first superposed current (IP+IX) resulting from a superposition of the principal current and of an auxiliary current and then a second superposed current (IP-IX) resulting from a superposition of the principal current and of the opposite auxiliary current, or the second current and then the first current to distribute successively each of the superposed currents in the N first transistors (TR1i) so as to generate for each first transistor a corresponding second mean gate source voltage (VGSM2), to bias the gate of each second transistor by the said corresponding second mean gate source voltage, and to deliver to each common node the said reference current equal to the said base current.

3. Integrated circuit according to Claim 1, in which the first coupling means are configurable and capable furthermore of taking on command a third state in which they are able, when the said domain (DD) is powered, to generate the said principal current (IP), to distribute the principal current in the N first transistors so as to generate for each first transistor the said first mean gate source voltage, to bias the gate of each second transistor by the said first mean gate source voltage (VGSM), and to successively deliver to each common node as reference current a first current resulting from a superposition of the said base current and of an auxiliary current (IX) and then a second current resulting from a superposition of the said base current and of the opposite auxiliary current (-JX), or the second current and then the first current.

4. Integrated circuit according to Claim 2 or 3, in which the device comprises control means (MCM) configured to place the first coupling means in their second or their third state and processing means (MTR) configured to analyse at the level of each output node the value of the output signal associated with the said auxiliary current and the value of the output signal associated with the opposite auxiliary current, and in case of disagreement between the two logical values of the corresponding bit of the digital code that are respectively associated with these two output signal values, take a decision as regards the management of the corresponding bit of the digital code.

5. Integrated circuit according to Claim 4, in which the control means (MCM) are configured to place the first coupling means in their second or their third state during the first power-up of the said domain, and to place the first coupling means in their first state during the first power-up subsequent to their placement in the second state or the third state, and during any later power-up, the said decision taken during the first power-up being valid for any later power-up.

6. Integrated circuit according to Claim 4 or 5, in which the processing means (MTR) are configured to take the said decision from among the following decisions or a combination of the following decisions: a disregarding of the corresponding bit in the digital code or a fixing of an arbitrary logical value for this bit.

7. Integrated circuit according to one of Claims 2 to 6, in which the first coupling means furthermore comprise a controllable auxiliary current source (SCA) configured to generate the said auxiliary current (IX) or the opposite auxiliary current
(-IX).

8. Integrated circuit according to one of the preceding claims, in which the first coupling means are configured to mount each first transistor (TR1i) according to a diode arrangement, to connect all the first transistors (TR1i) in parallel, and to connect the gates of the first transistors (TR1i) to the gate of each second transistor (TR2j), and comprise in their first state a current-divider block connected between the gates of the first transistors and each common node.

9. Integrated circuit according to Claim 8, in which the current-divider block comprises a current mirror (MR) connected between the N first transistors and each common node.

10. Integrated circuit according to Claim 8, in which the current-divider block comprises a principal transistor (TRP) connected to the gates of the first transistors (TR1i) and intended to impose the said principal current (IP) and to be biased on its gate by a bias voltage (Vbias), and a secondary transistor (TRSj) connected to each common node (NCj), whose gate is connected to the gate of the principal transistor and configured to provide the said base current to the corresponding common node.

11. Integrated circuit according to Claims 7 and 10, in which the controllable auxiliary current source (SCA) is coupled to the gates of the first transistors.

12. Integrated circuit according to one of the preceding claims, in which the said domain comprises at least one additional transistor (TRSS) alongside each MOS transistor (TR1i, TR2j) of the said set whose channel region (ZCS) comprises dopants of the same type of conductivity as the dopants of the source region (SS) and drain region (DD) of the said at least one additional transistor (TRSS).

13. Integrated circuit according to Claim 12, in which each MOS transistor of the said set is flanked by two additional transistors (TRSS).

14. Integrated circuit according to one of the preceding claims, in which N is greater than 10.

15. Method for producing a physically unclonable function device within a domain of an integrated circuit, comprising a producing within the said domain (DD) of a set of MOS transistors (TR1i, TR2j) exhibiting a random distribution of respective threshold voltages, a first coupling of a group of N first transistors (TR1i) of the said set and of at least one second transistor (TR2j) of the said set via at least one common node (NCj), a second coupling between each common node and a corresponding output node (NSj) of the said device, the first coupling being configured to, when the said domain is powered, generate a principal current (IP) and optionally an auxiliary current (IX) or the opposite auxiliary current (-IX), distribute the principal current or the principal current superposed with the auxiliary current or with the opposite auxiliary current in the N first transistors so as to generate for each first transistor a corresponding mean gate source voltage, to bias the gate of each second transistor by the said corresponding mean gate source voltage, and deliver to each common node a reference current (IRj) equal to a base current corresponding to 1/N^{th} of the principal current or to the base current superposed with the auxiliary current or with the opposite auxiliary current, the second coupling being configured to deliver to each output node an output signal whose level depends on a comparison between the level of the reference current and the level of the current passing through the corresponding second principal transistor.

16. Method according to Claim 15, in which the first coupling comprises an arranging of each first transistor in diode fashion, an arranging of all the first transistors (TR1i) in parallel, a connecting of the gates of the first transistors to the gate of each second transistor and a producing of a current-divider block connected between the gates of the first transistors and each common node.

17. Method according to Claim 16, in which the producing of the current-divider block comprises a producing of a current mirror (MR) connected between the N first transistors and each common node.

18. Method according to Claim 16, in which the producing of the current-divider block comprises a producing of a principal transistor (TR) connected to the gates of the first transistors and intended to impose the said principal current and to be biased on its gate by a bias voltage, and a secondary transistor (TRSj) connected to each common node, whose gate is connected to the gate of the principal transistor and configured to provide the said reference current to the corresponding common node.

19. Method according to one of Claims 15 to 18, in which the producing of the said set of MOS transistors comprises a forming above a substrate of the integrated circuit of a polysilicon layer (3), a forming on the said polysilicon layer of a mask (4) comprising openings (40), an initial implantation (IMP) in the substrate through the said openings and the uncovered parts of the polysilicon layer, of dopants having the same type of conductivity as the source region and drain region of the set of the said MOS transistors so as to produce initial implanted regions (RPI) overhanging on each side of the said uncovered polysilicon parts, a withdrawing of the mask and a forming of the said MOS transistors alongside the said uncovered polysilicon parts so that each first or second MOS transistor (TR1i, TR2j) has in the substrate an active zone incorporating at least one part of an initial implanted region.

20. Method according to Claim 19, in which each first or second MOS transistor (TR1i, TR2j) is flanked by two uncovered polysilicon parts so that each first or second MOS transistor has in the substrate an active zone incorporating on each side at least one part of an initial implanted region.

21. Method according to Claim 19 or 20, in which the integrated circuit incorporating the said physically unclonable function device is produced within a semiconductor wafer (WF) simultaneously with other integrated circuits, the said polysilicon layer as well as the said mask are formed above the substrate of the whole wafer and the said initial implantation of dopants is performed solid-wafer.

22. Method according to one of Claims 15 to 21, in which N is chosen greater than 10.

23. Method for automatically generating a non-predictable unique code at each output node (NSj) of a physically unclonable function device (DIS) belonging to an integrated circuit according to one of Claims 1 to 14 or produced in accordance with the method according to one of Claims 15 to 22, comprising at least one power-up of the domain of the integrated circuit incorporating the said device.

24. Method according to Claim 23, furthermore comprising, when the physically unclonable function device belongs to an integrated circuit according to one of Claims 1 to 14 taken in combination with Claim 10 or is produced in accordance with the method according to one of Claims 15 to 22 taken in combination with Claim 18, an application of the said bias voltage (Vbias) to the gate of the principal transistor and to the gate of each secondary transistor.

25. Method according to one of Claims 23 or 24, furthermore comprising, during the first power-up of the domain (DD) of the integrated circuit incorporating the physically unclonable function device, a first superposition with the said principal current (IP) of an auxiliary current (IX) and a second superposition with the said principal current of the opposite auxiliary current (-IX), an analysis of the value of the output signal delivered by each output node during the first superposition and an analysis of the value of the output signal delivered by each output node during the second superposition, and in case of disagreement between the two logical values of the corresponding bit of the digital code that are respectively associated with these two output signal values, a decision taking as regards the management of the said bit, decision valid for the rest of the first power-up and for any later power-up.

26. Method according to Claim 25, in which the said decision taking comprises a disregarding of the corresponding bit in the digital code or a fixing of an arbitrary logical value for this bit, or a combination of these two decisions.
